# EUROPEAN PATENT APPLICATION

(11) **EP 3 817 469 A1**
(43) Date of publication of application: **05.05.2021**
(21) Application number: 19799822.2
(22) Date of filing: 09.05.2019
(51) Int. Cl.: H04W 72/00

(54) **METHOD AND DEVICE FOR COMMUNICATION**

(30) Priority: 11.05.2018 CN 201810450801
(71) Applicant: Huawei Technologies Co., Ltd., Longgang District Shenzhen, Guangdong 518129 (CN)
(72) Inventor: QIN, Yi, Shenzhen, Guangdong 518129 (CN); JI, Liuliu, Shenzhen, Guangdong 518129 (CN)
(74) Representative: Gill Jennings & Every LLP
(86) International application number: PCT/CN2019/086202
(87) International publication number: WO 2019/214682

(57) **Abstract**

This application provides a communication method and a communications apparatus. The communication method includes: if a first SRS resource collides with a second SRS resource in a same slot or a same symbol, sending and receiving an SRS on one of the first SRS resource and the second SRS resource in the same slot or the same symbol; and/or if at least one GP symbol between resources included in a first resource set is the same as a symbol in a second resource, sending and receiving an SRS or a PUCCH on the second resource. The communication method is applicable to sending and receiving a signal used for uplink channel quality measurement when a resource collision occurs.

## Description

This application claims priority to Chinese Patent Application No. 201810450801.6, filed with China National Intellectual Property Administration on May 11, 2018 and entitled "COMMUNICATION METHOD AND COMMUNICATIONS APPARATUS", which is incorporated herein by reference in its entirety.

### TECHNICAL FIELD

This application relates to the field of communications technologies, and more specifically, to a communication method and a communications apparatus.

### BACKGROUND

In a 4th generation (4th generation, 4G) mobile communications system such as long term evolution (long term evolution, LTE)/long term evolution-advanced (LTE advanced, LTE-A) system, user equipment (user equipment, UE) periodically or aperiodically sends an SRS to an evolved NodeB (evolved Node B, eNB) based on a sounding reference signal (sounding reference signal, SRS) resource configured by the eNB, so that the eNB completes uplink channel measurement and uplink resource scheduling. However, if a base station configures a plurality of SRS resources for same UE, and the plurality of SRS resources are in a same subframe, the UE considers that a collision occurs in the plurality of SRS resources, and stops sending the SRS in the subframe. As a result, a resource originally used to send the SRS is idle. Consequently, resource utilization is reduced, and the uplink channel measurement and the uplink resource scheduling are adversely affected.

In a 5th generation (5th generation, 5G) mobile communications system such as a new radio access technology (new radio access technology, NR), the UE also periodically, semi-persistently, or aperiodically sends an SRS to the gNB based on an SRS resource configured by a gNodeB (g Node B, gNB). The SRS resource configured by the gNB may be at least one SRS resource set, and each SRS resource set may include at least one SRS resource. Currently, the SRS resource set may be one of the following types (setUse) of SRS resource sets: a codebook (codebook, CB) based SRS resource set, a non-codebook (non-codebook, NCB) based SRS resource set, an SRS resource set used for beam management (beam management, BM), and an SRS resource set used for antenna switching (Antenna Switching, AS). From a perspective of technologies, technologies such as AS in a slot (slot) and BM can be supported in NR. To be specific, the same UE can simultaneously send SRSs on different SRS resources in a same slot, provided that at least one of a time domain resource, a frequency domain resource, and a code domain resource in the different SRS resources can be distinguished. However, in existing NR protocol Release R15 (release 15), the foregoing scenarios are not distinguished, and the SRSs are not sent in the same slot. In other words, the NR also has a problem similar to that of the LTE/LTE-A.

### SUMMARY

This application provides a communication method and a communications apparatus, to be applicable to sending and receiving an uplink signal used for uplink channel quality measurement when a resource collision occurs in a communications system.

According to a first aspect, a communication method is provided, including: A terminal receives first sounding reference signal SRS configuration information and second SRS configuration information, and determines whether a first SRS resource collides with a second SRS resource in a time unit. Even if a collision occurs, the terminal can determine to send an SRS on one of the first SRS resource and the second SRS resource in the time unit. The first SRS configuration information is used to indicate the terminal to send the SRS on the first SRS resource, the second SRS configuration information is used to indicate the terminal to send the SRS on the second SRS resource, and the time unit includes a slot or a symbol.

Optionally, when the time unit is the symbol, the terminal may further determine not to transmit the SRS on another SRS resource other than one of the first SRS resource and the second SRS resource on a symbol other than the time unit in a slot in which the time unit is located, that is, the terminal determines to transmit the SRS only on one of the first SRS resource and the second SRS resource in the slot in which the time unit is located. In other words, the terminal determines not to transmit the SRS on another SRS resource other than one of the first SRS resource and the second SRS resource in the slot in which the time unit is located.

Alternatively, the terminal does not consider that first configuration information and second configuration information that cause the collision between the first SRS resource and the second SRS resource in the time unit are received. Optionally, when the terminal receives the first configuration information and the second configuration information that cause the collision between the first SRS resource and the second SRS resource in the time unit, the terminal determines that the first configuration information and the second configuration information are incorrect configuration information.

It can be learned that, even if the first SRS resource collides with the second SRS resource in the time unit, the terminal can send the SRS on one of the first SRS resource and the second SRS resource in the time unit, so that it is avoided that both the first SRS resource and the second SRS resource are idle in the time unit, thereby improving SRS resource utilization efficiency and SRS transmission efficiency. Therefore, uplink channel measurement efficiency and uplink resource scheduling efficiency are improved.

Optionally, the first SRS resource belongs to a first SRS resource set, and the second SRS resource belongs to a second SRS resource set. Correspondingly, that a first SRS resource collides with a second SRS resource in a time unit may include: the first SRS resource and the second SRS resource satisfy a first time-domain collision condition, and at least one of the first SRS resource set and the second SRS resource set is a resource set used for antenna switching AS. The first time-domain collision condition is: at least one slot included in the first SRS resource is the same as at least one slot included in the second SRS resource, and the time unit is the slot.

Optionally, the first SRS resource belongs to a first SRS resource set, and the second SRS resource belongs to a second SRS resource set. Each of the first SRS resource set and the second SRS resource set may be one of the following types of SRS resource sets: a codebook CB based SRS resource set, a non-codebook NCB based SRS resource set, an SRS resource set used for beam management BM, and an SRS resource set used for antenna switching AS. Correspondingly, that a first SRS resource collides with a second SRS resource in a time unit may include: the first SRS resource and the second SRS resource satisfy a second time-domain collision condition and a first type collision condition. The second time-domain collision condition is: at least one symbol included in the first SRS resource is the same as at least one symbol included in the second SRS resource, and the time unit is the symbol. The first type collision condition is: the first SRS resource set and the second SRS resource set are different types of SRS resource sets.

Optionally, the first SRS resource belongs to a first SRS resource set, and the second SRS resource belongs to a second SRS resource set. Correspondingly, that a first SRS resource collides with a second SRS resource in a time unit may include: the first SRS resource and the second SRS resource satisfy a second time-domain collision condition and a second type collision condition. The second time-domain collision condition is: at least one symbol included in the first SRS resource is the same as at least one symbol included in the second SRS resource, and the time unit is the symbol. The second type collision condition is: both the first SRS resource set and the second SRS resource set are SRS resource sets used for antenna switching AS.

Optionally, the first SRS resource belongs to a first SRS resource set, and the second SRS resource belongs to a second SRS resource set. Correspondingly, that a first SRS resource collides with a second SRS resource in a time unit may include: the first SRS resource and the second SRS resource satisfy a second time-domain collision condition and a third type collision condition. The second time-domain collision condition is: at least one symbol included in the first SRS resource is the same as at least one symbol included in the second SRS resource, and the time unit is the symbol. The third type collision condition is: the first SRS resource set is an SRS resource set used for beam management BM, a third SRS resource indicated by spatial relation information in the second SRS configuration information belongs to the first SRS resource set, and the third SRS resource is different from the first SRS resource.

Optionally, the first SRS resource belongs to a first SRS resource set, and the second SRS resource belongs to a second SRS resource set. Correspondingly, that a first SRS resource collides with a second SRS resource in a time unit may include: the first SRS resource and the second SRS resource satisfy a second time-domain collision condition and a fourth type collision condition. The second time-domain collision condition is: at least one symbol included in the first SRS resource is the same as at least one symbol included in the second SRS resource, and the time unit is the symbol. The fourth type collision condition is: a fourth SRS resource indicated by spatial relation information in the first SRS configuration information is different from a fifth SRS resource indicated by spatial relation information in the second SRS configuration information, the fourth SRS resource and the fifth SRS resource belong to a same SRS resource set, and the same SRS resource set is an SRS resource set used for beam management.

Optionally, that a first SRS resource collides with a second SRS resource in a time unit may include: the first SRS resource and the second SRS resource satisfy all of a second time-domain collision condition, a frequency-domain collision condition, and a code-domain collision condition. The second time-domain collision condition is: at least one symbol included in the first SRS resource is the same as at least one symbol included in the second SRS resource, and the time unit is the symbol. The frequency-domain collision condition is: the first SRS resource and the second SRS resource include at least one same subcarrier. The code-domain collision condition is: the first SRS resource and the second SRS resource include at least one SRS sequence that has a same cyclic shift.

Optionally, that the terminal determines to send the SRS on one of the first SRS resource and the second SRS resource in the time unit may include: If the terminal determines that a priority of the first SRS resource is higher than a priority of the second SRS resource, the terminal determines to send the SRS on the first SRS resource in the time unit. In this way, it can be ensured that a high-priority SRS resource is preferentially used to transmit the SRS. A priority of an SRS resource may be determined based on at least one factor, such as a type of an SRS resource set to which the SRS resource belongs (a CB based SRS resource set, an NCB based SRS resource set, an SRS resource set used for BM, or an SRS resource set used for AS), an (periodic, semi-persistent, or aperiodic) SRS sending manner, a quantity of slots or symbols included in the SRS resource, a scheduling time (a time point at which DCI used to trigger aperiodic SRS transmission is received), or an activation time (a time point at which a MAC CE used to activate semi-persistent SRS transmission is received). It should be understood that, factors that affect the priority of the SRS resource may further include other factors in addition to the foregoing factors. The other factors are not listed one by one in this application.

For example, a higher priority may be set for an SRS resource that has greater impact on uplink channel measurement and uplink resource scheduling. For example, a priority of an SRS resource included in the SRS resource set used for BM is usually higher than priorities of SRS resources included in the foregoing three types of SRS resource sets. For another example, in a same slot, a priority of an SRS resource that occupies a relatively large quantity of symbols may be usually higher than a priority of an SRS resource that occupies a relatively small quantity of symbols.

For example, a higher priority may alternatively be set for an SRS resource that has a higher requirement for timeliness of uplink channel measurement and uplink resource scheduling. For example, a priority of an SRS resource for which an aperiodic (aperiodic, AP) sending manner is used is higher than a priority of an SRS resource for which a semi-persistent (semi-persistent, SP) sending manner is used, and the priority of the SRS resource for which the semi-persistent sending manner is used is higher than a priority of an SRS resource for which a periodic (periodic, P) sending manner is used.

For example, priorities of different SRS resources may alternatively be determined based on a scheduling time sequence or an activation time sequence of the different SRS resources. For example, a priority of an SRS resource whose scheduling time or activation time is later is higher than a priority of an SRS resource whose scheduling time or activation time is earlier.

It should be understood that the priority of the SRS resource may be determined based on one factor, or may be comprehensively determined based on a plurality of factors. For example, both a timeliness requirement and the scheduling time sequence or the activation time sequence are considered. For example, SRS resources may be first classified into an aperiodic group, a semi-persistent group, and a periodic group according to an SRS sending manner, and priorities of the aperiodic group, the semi-persistent group, and the periodic group are in descending order. Then, a priority of each SRS resource in each group is determined based on a scheduling time sequence or an activation time sequence of all SRS resources included in the group.

Optionally, the communication method may further include: The terminal receives third SRS configuration information, where the third SRS configuration information is used to indicate the terminal to send an SRS on a sixth SRS resource. Then, the terminal determines that the sixth SRS resource collides with the second SRS resource but does not collide with the first SRS resource in the time unit. Correspondingly, that the terminal determines to send the SRS on the first SRS resource in the time unit may include: The terminal determines send the SRSs on the first SRS resource and the sixth SRS resource in the time unit.

Optionally, the communication method may further include: The terminal reports a quantity of resources or ports that can be used to send SRSs in a same symbol. In this way, the network device determines SRS configuration information for the terminal based on the quantity of resources or ports, so that it can be ensured that the configured quantity of resources or ports used to simultaneously transmit the SRSs does not exceed a maximum quantity that can be supported by the terminal, thereby reducing a probability of a collision between SRS resources indicated by different SRS configuration information, and further improving SRS resource utilization efficiency and SRS transmission efficiency.

According to a second aspect, a communication method is provided, including: A network device sends first sounding reference signal SRS configuration information and second SRS configuration information, where the first SRS configuration information is used to indicate a terminal to send an SRS on a first SRS resource, and the second SRS configuration information is used to indicate the terminal to send an SRS on a second SRS resource. Then, if the first SRS resource collides with the second SRS resource in a time unit, the network device determines to receive the SRS on one of the first SRS resource and the second SRS resource in the time unit, where the time unit includes a slot or a symbol.

It can be learned that, even if the first SRS resource collides with the second SRS resource in the time unit, the network device can receive the SRS on one of the first SRS resource and the second SRS resource in the time unit, so that it is avoided that both the first SRS resource and the second SRS resource are idle in the time unit, thereby improving SRS resource utilization efficiency and SRS transmission efficiency. Therefore, uplink channel measurement efficiency and uplink resource scheduling efficiency are improved.

It may be understood that the first SRS configuration information and the second SRS configuration information are determined and sent by the network device. In other words, the network device also has the capability of determining whether the first SRS resource collides with the second SRS resource in the first aspect and an optional solution of the first aspect. Therefore, the network device can receive, based on a determining result, the SRS only on an SRS resource that does not collide, to reduce an amount of calculation of the network device, thereby further improving SRS transmission efficiency and uplink resource scheduling efficiency.

It may be understood that the network device may alternatively determine to-be-sent SRS configuration information based on sent SRS configuration information, to avoid a collision between the SRS resources indicated by the two pieces of SRS configuration information.

It may be understood that, when determining that the first SRS resource collides with the second SRS resource in the time unit, the network device may also determine priorities of the first SRS resource and the second SRS resource by using a same communication method on a terminal side, and determine an SRS receiving solution based on the determined priorities. Therefore, correspondingly, that the network device determines to receive the SRS on one of the first SRS resource and the second SRS resource in the time unit may include: The network device determines that the priority of the first SRS resource is higher than the priority of the second SRS resource, and determines to receive the SRS on the first SRS resource in the time unit.

Optionally, the communication method further includes: The network device sends third SRS configuration information, where the third SRS configuration information is used to indicate the terminal to send an SRS on a sixth SRS resource. Then, the network device determines that the sixth SRS resource collides with the second SRS resource but does not collide with the first SRS resource in the time unit and that the priority of the second SRS resource is higher than a priority of the sixth SRS resource. Correspondingly, that the network device determines to receive the SRS on the first SRS resource in the time unit may include: The network device receives the SRSs on the first SRS resource and the sixth SRS resource in the time unit.

Optionally, corresponding to the step in which the terminal reports the quantity of resources or ports that can be used to send the SRSs in the same symbol in the first aspect, the communication method further includes: The network device receives the quantity of resources or ports that can be used by the terminal to send the SRSs in the same symbol, and determines the SRS configuration information for the terminal based on the quantity of resources or ports. In this way, a probability of a collision between SRS resources indicated by different SRS configuration information is reduced, thereby further improving SRS resource utilization efficiency and SRS transmission efficiency.

According to a third aspect, a communication method is provided, including: A terminal receives first configuration information and second configuration information, where the first configuration information is used to indicate the terminal to send a sounding reference signal SRS on at least one first resource included in a first resource set, the first resource set is an SRS resource set used for antenna switching AS, and the second configuration information is used to indicate the terminal to send an SRS or an uplink control channel PUCCH on a second resource. Then, if at least one guard interval GP symbol between the first resources in the first resource set is the same as a symbol in the second resource, the terminal determines to send the SRS or the PUCCH on the second resource, so that it is avoided that all the first resources included in the first resource set and the second resource are idle, thereby improving resource utilization efficiency and signal transmission efficiency.

Optionally, the communication method may further include: The terminal determines to send the SRS on a first resource in the first resource set other than a symbol that satisfies a first condition, where the first condition is one of the following conditions: the symbol includes a symbol that is in the first resource set and that is located before the GP symbol and closest to the GP symbol; the symbol includes all symbols in a first resource that is in the first resource set and that is located before the GP symbol and closest to the GP symbol; the symbol includes a symbol that is in the first resource set and that is located behind the GP symbol and closest to the GP symbol; the symbol includes all symbols in a first resource that is in the first resource set and that is located behind the GP symbol and closest to the GP symbol; the symbol includes a symbol that is in the first resource set and that is located before the GP symbol and closest to the GP symbol and a symbol that is in the first resource set and that is located behind the GP symbol and closest to the GP symbol; the symbol includes all symbols in a first resource that is in the first resource set and that is located before the GP symbol and closest to the GP symbol and all symbols in a first resource that is in the first resource set and that is located behind the GP symbol and closest to the GP symbol; and the symbol includes a symbol that is in the first resource set and that uses a different transmit antenna from the second resource.

It may be understood that, to simplify processing, the terminal may alternatively not determine the first condition. Therefore, optionally, the communication method may alternatively include: The terminal determines not to send the SRS on the first resource set in a slot in which the second resource is located.

According to a fourth aspect, a communication method is provided, including: A network device sends first configuration information and second configuration information, where the first configuration information is used to indicate a terminal to send a sounding reference signal SRS on at least one first resource included in a first resource set, the first resource set is an SRS resource set used for antenna switching AS, and the second configuration information is used to indicate the terminal to send an SRS or an uplink control channel PUCCH on a second resource. Then, if at least one guard interval GP symbol between the first resources in the first resource set is the same as a symbol in the second resource, the network device determines to receive the SRS or the PUCCH on the second resource, so that it is avoided that all the first resources included in the first resource set and the second resource are idle, thereby improving resource utilization efficiency and signal transmission efficiency.

Optionally, the communication method may further include: The network device determines to receive the SRS on a first resource in the first resource set other than a symbol that satisfies a first condition, where the first condition is one of the following conditions: the symbol includes a symbol that is in the first resource set and that is located before the GP symbol and closest to the GP symbol; the symbol includes all symbols in a first resource that is in the first resource set and that is located before the GP symbol and closest to the GP symbol; the symbol includes a symbol that is in the first resource set and that is located behind the GP symbol and closest to the GP symbol; the symbol includes all symbols in a first resource that is in the first resource set and that is located behind the GP symbol and closest to the GP symbol; the symbol includes a symbol that is in the first resource set and that is located before the GP symbol and closest to the GP symbol and a symbol that is in the first resource set and that is located behind the GP symbol and closest to the GP symbol; the symbol includes all symbols in a first resource that is in the first resource set and that is located before the GP symbol and closest to the GP symbol and all symbols in a first resource that is in the first resource set and that is located behind the GP symbol and closest to the GP symbol; and the symbol includes a symbol that is in the first resource set and that uses a different transmit antenna from the second resource.

It may be understood that, to simplify processing, the network device may alternatively not determine the first condition. Therefore, optionally, the communication method may alternatively include: The network device determines not to receive the SRS on the first resource set in a slot in which the second resource is located.

It may be understood that the first configuration information and the second configuration information are determined and sent by the network device. In other words, the network device also has the capability of determining a collision between the first resource and the second resource in the third aspect and an optional solution of the third aspect. Therefore, the network device can receive, based on a determining result, the SRS only on a resource that does not collide, to reduce an amount of calculation of the network device, thereby further improving SRS transmission efficiency and uplink resource scheduling efficiency.

It may be understood that the network device may alternatively determine to-be-sent configuration information based on sent configuration information, to avoid a collision between the resources indicated by the two pieces of configuration information.

According to a fifth aspect, a communication method is provided, including: A terminal receives first configuration information and second configuration information, where the first configuration information is used to indicate the terminal to send a sounding reference signal SRS on at least one SRS resource included in a first resource set, the first resource set is an SRS resource set used for antenna switching AS, and the second configuration information is used to indicate the terminal to send an uplink control channel PUCCH on a second resource. Then, the terminal sends the SRS on a first resource, and sends the PUCCH on the second resource, where there is at least one guard interval GP symbol between a first symbol of a first first resource or a last symbol of a last first resource in the first resource set and the second resource in a same slot.

Optionally, if a symbol of the second resource is located before all SRS resources in the first resource set in a slot, the terminal determines that there are Y GP symbols between the second resource and a first SRS resource in the first resource set in the slot.

Optionally, if a symbol of the second resource is located behind all SRS resources in the first resource set in a slot, the terminal determines that there are Y GP symbols between the second resource and a last SRS resource in the first resource set in the slot. Y is a positive integer greater than or equal to 1, and may be configured by the network device or predefined. For example, for a subcarrier spacing of 15 kHz (kilo-hertz, KHz) to 60 kHz, Y=1; for a subcarrier spacing of 120 kHz, Y=2; and for a subcarrier spacing of 240 kHz, Y=4. The terminal performs no transmission or no uplink transmission in the GP. In this way, a sufficient switching time can be ensured during antenna switching between the SRS and the PUCCH, so that transmission performance of the SRS and the PUCCH is not affected.

It may be understood that whether a GP symbol between the at least one SRS resource in the first resource set is used to transmit another channel or signal is not limited herein.

According to a sixth aspect, a communication method is provided, including: A network device sends first configuration information and second configuration information, where the first configuration information is used to indicate a terminal to send a sounding reference signal SRS on at least one SRS resource included in a first resource set, the first resource set is an SRS resource set used for antenna switching AS, and the second configuration information is used to indicate the terminal to send an uplink control channel PUCCH on a second resource. Then, the network device receives the SRS on a first resource, and receives the PUCCH on the second resource, where there is at least one guard interval GP symbol between a first symbol of a first first resource or a last symbol of a last first resource in the first resource set and the second resource in a same slot. It may be understood that whether a GP symbol between the at least one SRS resource in the first resource set is used to transmit another channel or signal is not limited herein.

It may be understood that the network device may alternatively determine to-be-sent configuration information based on sent configuration information, to avoid a collision between the resources indicated by the two pieces of configuration information.

According to the communication method provided in this embodiment of this application, in a slot in which there is at least one GP symbol between an SRS resource included in the first resource set and the second resource, the SRS can be sent and received on the at least one first resource before the GP symbol and the PUCCH can be sent and received on the second resource after the GP symbol, or the SRS can be sent and received on the at least one first resource after the GP symbol and the PUCCH can be sent and received on the second resource before the GP symbol, so that a sufficient time is reserve for antenna switching, thereby avoiding adverse impact on SRS transmission and PUCCH transmission, and ensuring uplink channel quality evaluated based on an SRS measurement result and a PUCCH measurement result and accuracy of uplink resource scheduling.

According to a seventh aspect, a communications apparatus is provided, configured to perform the communication method according to any one of the first aspect to the sixth aspect and the optional manners of the first aspect to the sixth aspect.

According to an eighth aspect, a communications apparatus is provided. The communications apparatus includes: a processor, where the processor is coupled to a memory; and the memory, configured to store a computer program, where the processor is configured to execute the computer program stored in the memory, so that the apparatus performs the communication method according to any one of the first aspect to the sixth aspect and the optional manners of the first aspect to the sixth aspect.

In a possible design, the apparatus includes one or more processors and a communications unit. The one or more processors are configured to support the apparatus in implementing a corresponding function of the terminal in the foregoing communication method. For example, the one or more processors are configured to: determine whether a first SRS resource collides with a second SRS resource, or determine whether a GP symbol between resources included in a first resource set is the same as a symbol in a second resource. The communications unit is configured to support the apparatus in communicating with another device, to implement a receiving function and/or a sending function. For example, the communications unit is configured to: receive first SRS configuration information and second SRS configuration information, receive first configuration information and second configuration information, or send an SRS.

Optionally, the apparatus may further include one or more memories. The memory is configured to be coupled to the processor, and stores a program instruction and/or data that are/is necessary for the apparatus. The one or more memories may be integrated with the processor, or may be disposed independent of the processor. This is not limited in this application.

The apparatus may be an intelligent terminal, a wearable device, or the like. The communications unit may be a transceiver or a transceiver circuit. Optionally, the transceiver may alternatively be an input/output circuit or an interface.

The apparatus may alternatively be a communications chip. The communications unit may be an input/output circuit or an interface of the communications chip.

In another possible design, the apparatus includes a transceiver, a processor, and a memory. The processor is configured to control the transceiver to send and receive a signal. The memory is configured to store a computer program. The processor is configured to run the computer program in the memory, so that the apparatus performs the communication method performed by the terminal or the network device in any communication method in the first aspect and the optional implementations of the first aspect, and/or the communication method performed by the terminal or the network device in any communication method in the second aspect and the optional implementations of the second aspect.

In a possible design, the apparatus includes one or more processors and a communications unit. The one or more processors are configured to support the apparatus in implementing a corresponding function of the network device in the foregoing communication method. For example, the one or more processors are configured to: determine whether a first SRS resource collides with a second SRS resource, or determine whether a GP symbol between resources included in a first resource set is the same as a symbol in a second resource. The communications unit is configured to support the apparatus in communicating with another device, to implement a receiving function and/or a sending function. For example, the communications unit is configured to: send first SRS configuration information and second SRS configuration information, send first configuration information and second configuration information, or receive an SRS.

Optionally, the apparatus may further include one or more memories. The memory is configured to be coupled to the processor, and stores a program instruction and/or data that are/is necessary for the network device. The one or more memories may be integrated with the processor, or may be disposed independent of the processor. This is not limited in this application.

The apparatus may be a base station, a gNB, a TRP, or the like. The communications unit may be a transceiver or a transceiver circuit. Optionally, the transceiver may alternatively be an input/output circuit or an interface.

The apparatus may alternatively be a communications chip. The communications unit may be an input/output circuit or an interface of the communications chip.

In another possible design, the apparatus includes a transceiver, a processor, and a memory. The processor is configured to control the transceiver to send and receive a signal. The memory is configured to store a computer program. The processor is configured to run the computer program in the memory, so that the apparatus performs the communication method performed by the network device in any one of the second aspect or the possible implementations of the second aspect.

According to a ninth aspect, a system is provided. The system includes the foregoing terminal and the foregoing network device.

According to a tenth aspect, a readable storage medium is provided, including a program or an instruction. When the program or the instruction is run on a computer, the communication method according to any one of the first aspect to the sixth aspect and the optional manners of the first aspect to the sixth aspect is performed.

According to an eleventh aspect, a computer program product is provided. The computer program product includes computer program code, and when the computer program code runs on a computer, the computer is enabled to perform the communication method according to any optional manner of any one of the first aspect to the sixth aspect.

According to the communication method provided in the embodiments of this application, a communication method for sending and receiving an uplink signal when a resource collision occurs may be provided, and is applicable to sending and receiving a signal used for uplink channel quality measurement when a resource collision occurs.

### BRIEF DESCRIPTION OF DRAWINGS

FIG. 1 is a schematic diagram of a communications system to which a communication method according to an embodiment of this application is applicable;
FIG. 2 is a schematic flowchart of a first communication method according to an embodiment of this application;
FIG. 3A is a first schematic diagram of a collision between different SRS resources in a first communication method according to an embodiment of this application;
FIG. 3B is a second schematic diagram of a collision between different SRS resources in a first communication method according to an embodiment of this application;
FIG. 3C is a third schematic diagram of a collision between different SRS resources in a first communication method according to an embodiment of this application;
FIG. 4 is a schematic scenario diagram of an SRS sending solution when an SRS resource collision occurs in a first communication method according to an embodiment of this application;
FIG. 5 is a schematic flowchart of a second communication method according to an embodiment of this application;
FIG. 6 is a schematic scenario diagram of a resource collision in a second communication method according to an embodiment of this application;
FIG. 7 is a schematic flowchart of a third communication method according to an embodiment of this application;
FIG. 8 is a schematic structural diagram of a terminal according to an embodiment of this application;
FIG. 9 is a schematic structural diagram of a network device according to an embodiment of this application; and
FIG. 10 is a schematic structural diagram of a communications apparatus according to an embodiment of this application.

### DESCRIPTION OF EMBODIMENTS

The following describes technical solutions of this application with reference to accompanying drawings.

The technical solutions in the embodiments of this application may be applied to various communications systems, for example, an LTE system, a worldwide interoperability for microwave access (worldwide interoperability for microwave access, WiMAX) communications system, a future 5th generation 5G system such as an NR system, and a future communications system such as a 6th generation (6th generation, 6G) system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may further be used.

In addition, the term "for example" in the embodiments of this application is used to represent giving an example, an illustration, or a description. Any embodiment or design scheme described as an "example" in this application should not be explained as being more preferred or having more advantages than another embodiment or design scheme. Exactly, the term "for example" is used to present a concept in a specific manner.

In the embodiments of this application, "information (information)", "signal (signal)", "message (message)", or "channel (channel)" may be mixedly used sometimes. It should be noted that meanings to be expressed are consistent when differences are not emphasized. The terms "of (of)", "corresponding (corresponding, relevant)", and "corresponding to (corresponding)" may be mixedly used sometimes. It should be noted that meanings to be expressed are consistent when differences are not emphasized.

In the embodiments of this application, sometimes a subscript in, for example, W₁ may be written in an incorrect form such as W1. Meanings to be expressed are consistent when differences are not emphasized.

A network architecture and a service scenario described in the embodiments of this application are intended to describe the technical solutions in the embodiments of this application more clearly, and do not constitute a limitation on the technical solutions provided in the embodiments of this application. A person of ordinary skill in the art may know that: With the evolution of the network architecture and the emergence of new service scenarios, the technical solutions provided in the embodiments of this application are also applicable to similar technical problems.

The embodiments of this application may be applied to a time division duplexing (time division duplexing, TDD) scenario or a frequency division duplexing (frequency division duplexing, FDD) scenario.

The embodiments of this application may be applied to a conventional typical network or a future UE-centric (UE-centric) network. A non-cell (non-cell) network architecture is introduced to the UE-centric network. To be specific, a large quantity of small cells are deployed in a specific area to form a hyper cell (hyper cell), and each small cell is a transmission point (transmission point, TP) or a TRP of the hyper cell, and is connected to a centralized controller (controller). When UE moves in the hyper cell, a network side device selects, for the UE in real time, a new sub-cluster (sub-cluster) to serve the UE, thereby avoiding a real cell handover, and implementing service continuity of the UE. The network side device includes a wireless network device, for example, a base station.

In the embodiments of this application, different base stations may be base stations having different identifiers, or may be base stations that have a same identifier and that are deployed at different geographical locations. Before being deployed, a base station does not know whether the base station is related to a scenario to which the embodiments of this application are applied. Therefore, before being deployed, the base station or a baseband chip needs to support a communication method provided in the embodiments of this application. It may be understood that the foregoing base stations having different identifiers may have base station identifications, cell identifiers, or other identifiers.

In the embodiments of this application, some scenarios are described by using an NR network scenario in a wireless communications network as an example. It should be noted that the solutions in the embodiments of this application may be further applied to another wireless communications network, and a corresponding name may also be replaced with a name of a corresponding function in the another wireless communications network.

In the embodiments of this application, a beam (beam) may be understood as a spatial resource, and may be a transmit or receive precoding vector having energy transmission directivity. In addition, the transmit or receive precoding vector can be identified by using index information. The energy transmission directivity may indicate that a signal precoded by using the precoding vector and received in a spatial position has a relatively good receive power, for example, satisfies a receive demodulation signal-to-noise ratio. The energy transmission directivity may also indicate that same signals transmitted from different spatial positions and received by using the precoding vector have different receive powers.

Optionally, a same communications device (for example, a terminal or a network device) may have different precoding vectors, and different devices may also have different precoding vectors, that is, correspond to different beams.

With respect to a configuration or a capability of a communications device, the communications device may use one or more of different precoding vectors at the same time, that is, one or more beams may be formed at the same time. Beam information may be identified by using index information. Optionally, the index information may correspond to a resource identity (identity, ID) configured for a terminal (for example, user equipment UE). For example, the index information may correspond to an ID or a resource configured for a channel state information-reference signal (channel state information reference signal, CSI-RS), or an ID or a resource configured for an uplink sounding reference signal (sounding reference signal, SRS). Optionally, the index information may alternatively be a signal carried by using a beam or index information explicitly or implicitly carried on a channel. For example, the index information may be a synchronization signal sent by using a beam or index information of the beam indicated by using a broadcast channel.

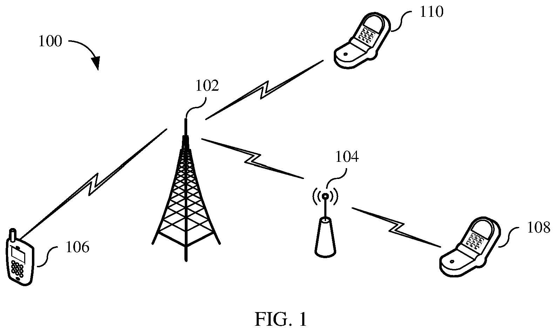

For ease of understanding the embodiments of this application, a communications system shown in FIG. 1 is first used as an example to describe in detail a communications system applicable to the embodiments of this application. FIG. 1 is a schematic diagram of a communications system to which a communication method according to an embodiment of this application is applicable. As shown in FIG. 1, the communications system 100 includes a network device 102 and a terminal 106. A plurality of antennas may be configured for the network device 102, and a plurality of antennas may also be configured for the terminal. Optionally, the communications system may further include a network device 104, and a terminal 108 that provides access of the network device 102 to the network device 104. In addition, the network device 104 may also be configured with a plurality of antennas, and the terminal 108 may also be configured with a plurality of antennas.

It should be understood that the network device 102 or the network device 104 may further include a plurality of components (for example, a processor, a modulator, a multiplexer, a demodulator, and a demultiplexer) related to signal sending and receiving.

The network device is a device having a wireless transceiver function or a chip that may be disposed in the device. The device includes but is not limited to: an evolved NodeB (evolved Node B, eNB), a radio network controller (radio network controller, RNC), a NodeB (Node B, NB), a base station controller (base station controller, BSC), a base transceiver station (base transceiver station, BTS), a home base station (for example, a home evolved NodeB, or a home Node B, HNB), a baseband unit (baseband unit, BBU), or an access point (access point, AP), a wireless relay node, a wireless backhaul node, a transmission point (transmission and reception point, TRP or transmission point, TP), or the like in a wireless fidelity (wireless fidelity, WIFI) system, or may be a gNB or a transmission point (TRP or TP) in a 5G system such as an NR system, or one of or one group (including a plurality of antenna panels) of antenna panels of a base station in an 5G system, or may be a network node, such as a baseband unit (BBU) or a distributed unit (distributed unit, DU), that constitutes a gNB or a transmission point.

In some deployments, the gNB may include a centralized unit (centralized unit, CU) and a DU. The gNB may further include a radio frequency unit (radio unit, RU). The CU implements a portion of functions of the gNB, and the DU implements a portion of functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer is eventually converted into information at the PHY layer, or is converted from information at the PHY layer. Therefore, in this architecture, higher layer signaling, such as RRC layer signaling or PHCP layer signaling, may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

The terminal may also be referred to as user equipment (user equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The terminal in the embodiments of this application may be a mobile phone (mobile phone), a tablet (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application. In this application, the terminal described above and the chip that can be disposed in the terminal are collectively referred to as the terminal.

In the communications system 100, the network device 102 and the network device 104 each may communicate with a plurality of terminals (for example, the terminal 106 and the terminal 110 shown in the FIG. 1). The network device 102 and the network device 104 may communicate with any quantity of terminals similar to the terminal 106. However, it should be understood that a terminal communicating with the network device 102 may be the same as or different from a terminal communicating with the network device 104. The terminal 106 shown in FIG. 1 may communicate with both the network device 102 and the network device 104, but this shows only a possible scenario. In some scenarios, the terminal may communicate with only the network device 102 or the network device 104. This is not limited in this application.

It should be noted that, in a communications system deployed by using a macro-micro base station architecture, when the network device is a macro base station, the terminal may also be replaced with a micro base station or a relay station. For example, as shown in FIG. 1, the network device 102 may be a macro base station, and correspondingly, the terminal may be replaced with the network device 104.

It should be understood that FIG. 1 is merely a simplified schematic diagram used as an example for ease of understanding. The communications system may further include another network device or another terminal, which is not shown in FIG. 1.

The communication method provided in this application relates to various uplink signals and resources used to transmit the uplink signals. In LTE, a PUSCH, a PUCCH, and an SRS are included. In the 5G system, an uplink data channel, a control channel, a reference signal used for demodulation, a reference signal used for channel measurement, a random access channel, and the like may be correspondingly targeted. The resources may be resources of different resource granularities, for example, may be resources of a minimum resource granularity, or may be a resource set. The resource set includes at least one minimum resource granularity. In time domain, the resource set may be at least one of a system frame, a radio frame, a frame, a subframe, a slot, a half slot, a mini slot, a symbol, a symbol set, or the like. In frequency domain, the resource set may be at least one of a carrier, system bandwidth, partial bandwidth, a bandwidth part, a subband, a resource block, a subcarrier, a serving cell, or the like. In code domain, the resource set may be at least one of a pilot sequence carried in the uplink signal, a pseudo-random sequence, a training sequence, an orthogonal code sequence, or a synchronization sequence, or a cyclic shift of a synchronization sequence. In space domain, the resource set may be at least one of a transmit antenna, a receive antenna, a beam, or the like. Usually, a resource granularity may be a scheduling granularity of a channel or a signal. For example, one slot may include one or more symbols, for example, may include 14 symbols or seven symbols. One subframe may include one or more symbols, for example, may include 14 symbols.

In a modern communications system, a multi-antenna technology is widely used in networks such as an LTE network, a 5G NR network, and a WIFI network. A node sends or receives a signal by using a plurality of antennas, which is referred to as MIMO for short in the following description. In a MIMO system, by adjusting MIMO transmit and receive schemes, for example, adjusting weights of transmit antennas and allocating different signals to different antennas, a node can obtain gains such as diversity and multiplexing gains, thereby improving a system capacity and system reliability. With development of a MIMO technology and application of massive MIMO (massive MIMO, M-MIMO), system performance can be further improved. In a high-frequency band, a signal has a relatively short wavelength, for example, a merely millimeter-level wavelength, and a corresponding antenna size is also reduced. In this way, the node in the network can be configured with a large-scale antenna array. In M-MIMO, the node can be configured with dozens, hundreds, or more antenna elements. These antenna elements can form an antenna array according to a specific arrangement, for example, a linear arrangement or a circular arrangement. For example, the antenna array may be divided into a plurality of antenna panels that can be independently controlled, and each antenna panel may include at least one antenna element. Different beams may be simultaneously transmitted on the plurality of antenna panels, or a beam may be transmitted on a portion of antenna panels. The transmitting may be implemented through at least one of technical means such as precoding (precoding), beam management (beam management, BM), and antenna switching (antenna switching, AS). When the node sends or receives a signal by using the antenna array, the node may obtain an antenna gain by adjusting a weight of an antenna element, so that energy of the sent signal or the received signal is unevenly distributed in space. By using some algorithms, a signal may have an effect of energy concentration in a portion of directions of space. This effect may be referred to as beamforming. In this case, the signal forms a beam in space. The space herein may be angle distribution in a horizontal direction, angle distribution in a vertical direction, and/or the like.

Beam transmission may be performed between the network device and the terminal. A beam is a physical resource. In some communications systems, the beam may be indexed as a pilot resource, a time-frequency resource, and/or the like.

A physical meaning of a beam is: A signal may be sent or received by using a multi-antenna technology, and a transmission node such as the network device or the terminal may perform weight processing on the plurality of antennas, so that energy of the sent signal and/or the received signal is unevenly distributed in a specific spatial direction. In this way, energy of the signals is aggregated to some extent. The energy aggregation may be referred to as a beam.

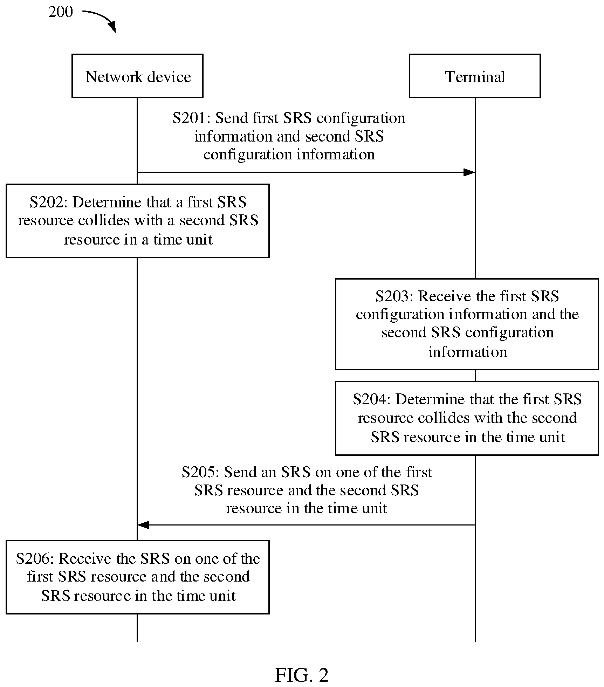

As shown in FIG. 2, an embodiment of this application provides a communication method, to be applicable to SRS transmission in an NR system. This embodiment of this application may be applied to communication between network devices (for example, a macro base station and a micro base station), and communication between a network device and a terminal. Herein, communication between the network device and the terminal is used as an example for description, but this application is not limited thereto.

As shown in FIG. 2, the communication method 200 may include S201 to S206.

S201: The network device sends first sounding reference signal SRS configuration information and second SRS configuration information.

The first SRS configuration information is used to indicate the terminal to send an SRS on a first SRS resource, and the second SRS configuration information is used to indicate the terminal to send an SRS on a second SRS resource.

For example, the network device may send either of the first SRS configuration information and the second SRS configuration information by performing the following steps.

Step 1: The network device sends SRS configuration information carrying at least one SRS resource set.

The network device may send radio resource control (radio resource control, RRC) signaling that carries at least one channel resource set used for uplink channel quality sounding. The RRC signaling may include the at least one channel resource set used for uplink channel quality sounding, a type (setUse) of each channel resource set used for uplink channel quality sounding, and an identifier of at least one channel resource that is used for uplink channel quality sounding and that is included in each channel resource set used for uplink channel quality sounding. For example, a channel used for uplink channel quality sounding may be an SRS, a physical uplink control channel PUCCH, or another signal, another channel, or another piece of signaling used for uplink channel quality sounding. This is not limited in this application.

Usually, the at least one channel resource set used for uplink channel quality sounding may include a maximum of one CB based channel resource set used for uplink channel quality sounding, a maximum of one NCB based channel resource set used for uplink channel quality sounding, zero, one, or more channel resource sets used for uplink channel quality sounding and BM, and zero, one, or more channel resource sets used for uplink channel quality sounding and AS. Because the foregoing four types of channel resource sets used for uplink channel quality sounding belong to the prior art, details are not described herein. The following uses an SRS and an SRS resource set as an example for description.

Step 2: The network device may trigger the SRS resource set in one of the following four manners.

Manner 1: The network device does not send a trigger indication.

If the terminal does not receive the trigger indication, the terminal periodically sends the SRS on an SRS resource included in each SRS resource set.

Different from Manner 1, in Manner 2 to Manner 4, the network device further sends signaling that carries an activation indication or a trigger indication of some or all SRS resource sets. Details are as follows:

Manner 2: The network device sends media access control control element (media access control control element, MAC CE) signaling that carries a semi-persistent (semi-persistent, SP) activation (activation) indication corresponding to each SRS resource set. If the activation indication indicates to activate the SRS resource set, after receiving the activation indication, the terminal sends the SRS on an SRS resource included in the SRS resource set until the terminal receives another piece of MAC CE signaling in which a deactivation indication indicates to deactivate the SRS resource set.

It should be noted that the MAC CE signaling may alternatively carry information such as an effective time. The effective time is a time point at which the terminal sends the SRS for the first time after receiving the MAC CE signaling. Because the effective time belongs to the prior art, details are not described in this embodiment of this application.

Manner 3: The network device sends downlink control information (downlink control information, DCI) signaling that carries an aperiodic (aperiodic, AP) trigger indication corresponding to the SRS resource set. For example, an SRS request (SRS Request) field in the DCI signaling may carry an aperiodic trigger indication of one or more SRS resource sets. If the trigger indication indicates to trigger the SRS resource set, the terminal sends the SRS on an SRS resource included in the SRS resource set, and then automatically stops sending the SRS.

In addition, the DCI signaling may alternatively carry information such as an effective time and a quantity of sending times. The effective time is a time point at which the terminal sends the SRS for the first time after receiving the DCI signaling. The quantity of sending times is a total quantity of times that the terminal needs to send the SRS after the terminal receives the DCI signaling. After the quantity of sending times is reached, the terminal automatically stops sending the SRS. Because the effective time and the quantity of sending times belong to the prior art, details are not described in this embodiment of this application.

Manner 4: The network device sends the DCI signaling that carries the aperiodic trigger indication, and further needs to send MAC CE signaling that carries configuration information used to configure a candidate set of the SRS resource set triggered by the aperiodic trigger indication.

Alternatively, the network device may send the MAC CE signaling that carries the semi-persistent activation indication and the DCI signaling that carries the aperiodic trigger indication.

For example, the network device may deliver, for a same SRS resource set, a trigger indication that indicates to use different sending manners at different time points, or may deliver, for different SRS resource sets, a trigger indication that indicates to use a same sending manner at a same time point. For example, the network device delivers, for an SRS resource set A, MAC CE signaling for semi-persistently sending the SRS at a first time point and MAC CE signaling for aperiodically sending the SRS at a second time point. For another example, when the network device requires that the SRSs be sent aperiodically for both the SRS resource set A and the SRS resource set B, the network device may deliver, for the SRS resource set A and the SRS resource set B, same DCI signaling that carries the aperiodic trigger indication.

It should be noted that, for each SRS resource set for which an SRS is sent semi-persistently, the network device needs to deliver, for each time of activation of the SRS resource set, MAC CE signaling that carries an activation indication. For an SRS resource set for which an SRS is sent aperiodically, the network device may add one or more trigger indications of the SRS resource set to DCI signaling. It may be understood that, for the SRS resource set for which an SRS is sent semi-persistently, after the terminal starts to send the SRS on an SRS resource included in the SRS resource set, if the network device needs to stop the terminal from sending the SRS, the network device further needs to deliver MAC CE signaling that carries a sending stop indication.

It should be understood that, the first SRS configuration information and the second SRS configuration information may be delivered in same downlink signaling or different downlink signaling. For example, the first SRS configuration information is delivered in RRC signaling 1, and the second SRS configuration information is delivered in RRC signaling 2. Similarly, different parts in same SRS configuration information may be delivered in same downlink signaling or different downlink signaling. For example, the SRS resource set in the configuration information may be delivered in the DCI signaling, and the trigger indication of the SRS resource set in the configuration information may be delivered in the MAC CE signaling or the DCI signaling.

S202: The network device determines that the first SRS resource collides with the second SRS resource in a time unit.

The time unit includes a slot or a symbol.

For example, the first SRS resource may collide with the second SRS resource in the time unit due to at least one of the following causes.

Cause 1: Limited by a capability of the terminal, the terminal cannot simultaneously send the SRSs on the first SRS resource and the second SRS resource in the time unit. For example, the terminal does not support all-antenna transmission (to be specific, a quantity of transmit antennas of the terminal is less than a quantity of receive antennas of the terminal). If the first SRS resource and the second SRS resource are separately located on different antennas, the first SRS resource collides with the second SRS resource. For another example, the terminal supports BM. If the first SRS resource and the second SRS resource respectively correspond to different analog transmit beams on a panel, the first SRS resource collides with the second SRS resource.

Cause 2: A time domain resource, a frequency domain resource, and a code domain resource included in the first SRS resource each are partially the same as that included in the second SRS resource, resulting in severe interference between the SRS sent on the first SRS resource and the SRS sent on the second SRS resource. Consequently, the network device cannot correctly parse the two SRSs.

Cause 3: The network device sends incorrect configuration information, resulting in a collision between the first SRS resource and the second SRS resource in the time unit.

It should be noted that, during actual application, there may be another cause of the collision. Details are not described in this embodiment of this application.

Optionally, when the time unit is the symbol, the terminal may further determine not to transmit the SRS on another SRS resource other than one of the first SRS resource and the second SRS resource on a symbol other than the time unit in a slot in which the time unit is located, that is, the terminal determines to transmit the SRS only on one of the first SRS resource and the second SRS resource in the slot in which the time unit is located. In other words, the terminal determines not to transmit the SRS on another SRS resource other than one of the first SRS resource and the second SRS resource in the slot in which the time unit is located.

Alternatively, the terminal does not consider that first configuration information and second configuration information that cause the collision between the first SRS resource and the second SRS resource in the time unit are received. Optionally, when the terminal receives the first configuration information and the second configuration information that cause the collision between the first SRS resource and the second SRS resource in the time unit, the terminal determines that the first configuration information and the second configuration information are incorrect configuration information. Further optionally, the terminal may send the SRS on the first SRS resource, or may send the SRS on the second SRS resource, or may send the SRS on neither the first SRS resource nor the second SRS resource.

Optionally, the first SRS resource belongs to a first SRS resource set, and the second SRS resource belongs to a second SRS resource set. Correspondingly, that the first SRS resource collides with the second SRS resource in a time unit may include: the first SRS resource and the second SRS resource satisfy a first time-domain collision condition, and at least one of the first SRS resource set and the second SRS resource set is a resource set used for antenna switching AS. The first time-domain collision condition is: at least one slot included in the first SRS resource is the same as at least one slot included in the second SRS resource, and the time unit is the slot.

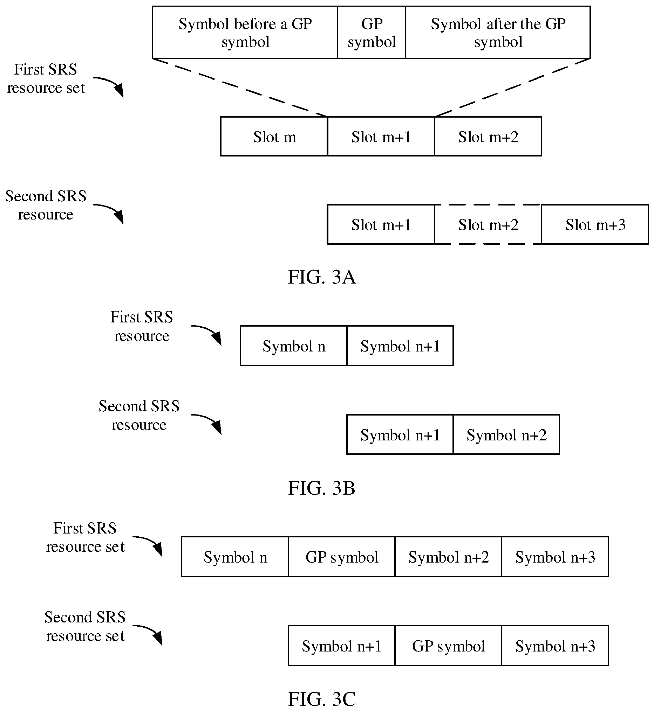

For example, as shown in FIG. 3A, the first SRS resource set is a resource set used for AS. The second SRS resource set may be or may not be a resource set used for AS. This is not limited in this application. The following uses an example in which the second SRS resource set is not a resource set used for AS for description.

As shown in FIG. 3A, the first SRS resource set includes a slot m, a slot m+1, and a slot m+2, where the slot m+1 includes a GP symbol. The second SRS resource includes the slot m+1 and a slot m+3, and does not include the slot m+2 (which is represented by a dashed-line box in FIG. 3A). In other words, the first SRS resource set and the second SRS resource satisfy the first time-domain collision condition in the slot m+1.

It should be noted that the first SRS resource set and the second SRS resource in FIG. 3A include only one same slot. Actually, there may be more than one same slot, and when there are a plurality of same slots, the plurality of same slots may be consecutive or inconsecutive. This is not limited in this application.

Certainly, one slot may usually include a plurality of symbols. Usually, only some symbols in the slot are required for one antenna switching. Therefore, a symbol that is included in the slot and that is not used for antenna switching may be used to send the SRS, or may be used to send another signal, for example, a downlink channel measurement report and data.

Optionally, the first SRS resource belongs to a first SRS resource set, and the second SRS resource belongs to a second SRS resource set. Each of the first SRS resource set and the second SRS resource set may be one of the following types of SRS resource sets: a codebook CB based SRS resource set, a non-codebook NCB based SRS resource set, an SRS resource set used for beam management BM, and an SRS resource set used for antenna switching AS. A type of the first SRS resource set may be the same as or different from that of the second SRS resource set.

Correspondingly, that the first SRS resource collides with the second SRS resource in a time unit may include: the first SRS resource and the second SRS resource satisfy a second time-domain collision condition and a first type collision condition. The second time-domain collision condition is: at least one symbol included in the first SRS resource is the same as at least one symbol included in the second SRS resource, and the time unit is the symbol.

For example, as shown in FIG. 3B, the first SRS resource includes a symbol n and a symbol n+1. The second SRS resource includes the symbol n+1 and a symbol n+2. In other words, the first SRS resource (the symbol n+1) and the second SRS resource (the symbol n+1) satisfy the second time-domain collision condition.

It should be noted that FIG. 3B shows a case in which one symbol (the symbol n+1) satisfies the second time-domain collision condition. Actually, there may be more than one symbol that satisfies the second time-domain collision condition. When there are a plurality of symbols that satisfy the second time-domain collision condition, the plurality of symbols may be consecutive or inconsecutive. This is not limited in this application.

Optionally, to simplify a process of determining whether there is a collision between types of resource sets, reduce an amount of calculation, and improve determining efficiency, only whether the first SRS resource set and the second SRS resource set are a same type of SRS resource sets may be determined. Therefore, the first type collision condition may be: the first SRS resource set and the second SRS resource set are different types of SRS resource sets.

Optionally, the first SRS resource belongs to a first SRS resource set, and the second SRS resource belongs to a second SRS resource set. Correspondingly, that the first SRS resource collides with the second SRS resource in a time unit may include: the first SRS resource and the second SRS resource satisfy a second time-domain collision condition and a second type collision condition. The second time-domain collision condition is: at least one symbol included in the first SRS resource is the same as at least one symbol included in the second SRS resource, and the time unit is the symbol. The second type collision condition is: both the first SRS resource set and the second SRS resource set are SRS resource sets used for antenna switching AS.

In existing NR protocol Release R15, a location of a GP symbol used for AS is not fixed. For example, the GP symbol may include some or all symbols between SRS resources in the SRS resource set used for AS in the slot, or Y symbols before and/or after SRS resources in the SRS resource set used for AS in the slot, where Y is an integer greater than or equal to 0. For example, Y=1 or Y=2.

As shown in FIG. 3C, the first SRS resource set includes a symbol n, a symbol n+2, and a symbol n+3, and a symbol n+1 is a GP symbol. The second SRS resource set includes a symbol n+1 and the symbol n+3, and the symbol n+2 is a GP symbol. In other words, both the first SRS resource set and the second SRS resource set include the symbol n+3, so that it is considered that the first SRS resource and the second SRS resource satisfy the second time-domain collision condition and the second type collision condition.

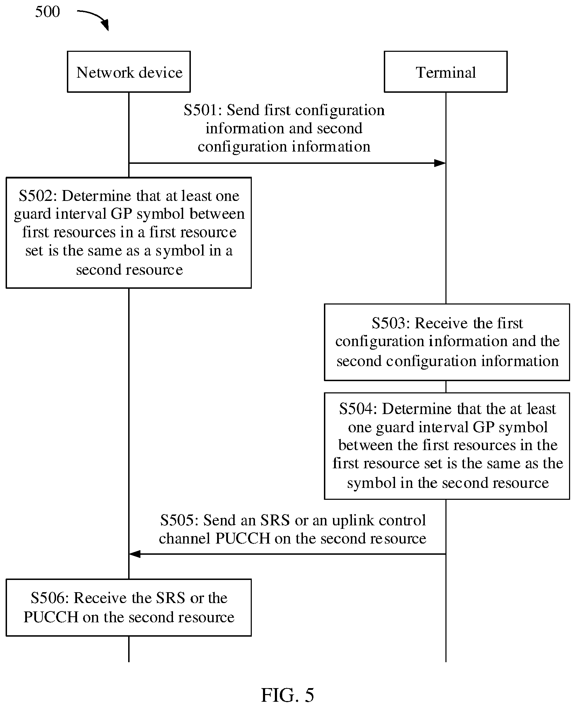

It should be noted that, if a GP symbol between first SRS resources included in the first SRS resource set is the same as a GP symbol between second SRS resources included in the second SRS resource set, for example, the two GP symbols are both the symbol n+1, and the first SRS resource does not collide with the second SRS resource on another symbol used to send the SRS, it is considered that the first SRS resource and the second SRS resource do not satisfy the second time-domain collision condition and the second type collision condition. If the GP symbol between the first SRS resources included in the first SRS resource set is the same as an SRS symbol between the second SRS resources included in the second SRS resource set, the collision may be resolved in a manner shown in FIG. 5.

Optionally, the first SRS resource belongs to a first SRS resource set, and the second SRS resource belongs to a second SRS resource set. Correspondingly, that the first SRS resource collides with the second SRS resource in a time unit may include: the first SRS resource and the second SRS resource satisfy a second time-domain collision condition and a third type collision condition. The second time-domain collision condition is: at least one symbol included in the first SRS resource is the same as at least one symbol included in the second SRS resource, and the time unit is the symbol. The third type collision condition is: the first SRS resource set is an SRS resource set used for beam management BM, a third SRS resource indicated by spatial relation information (spatialRelationInfo, SRI) in the second SRS configuration information belongs to the first SRS resource set, and the third SRS resource is different from the first SRS resource.

Usually, a beam indicated by the SRI may be an antenna panel used to send the SRS, that is, the SRS resource may further include a space domain resource. It may be understood that the terminal is indicated to send, on the second SRS resource, the SRS on an antenna panel that is the same as the antenna panel used to send an SRS on the third SRS resource indicated by the SRI in the second SRS configuration information. If the third SRS resource belongs to the first SRS resource set and is different from the first SRS resource, it is considered that the third type collision condition is satisfied.

It should be noted that whether the second SRS resource set is an SRS resource set used for BM does not need to be limited in this application. In other words, regardless of the type of the second SRS resource set, the second SRS resource set is applicable.

Optionally, the first SRS resource belongs to a first SRS resource set, and the second SRS resource belongs to a second SRS resource set. Correspondingly, that the first SRS resource collides with the second SRS resource in a time unit may include: the first SRS resource and the second SRS resource satisfy a second time-domain collision condition and a fourth type collision condition. The second time-domain collision condition is: at least one symbol included in the first SRS resource is the same as at least one symbol included in the second SRS resource, and the time unit is the symbol. The fourth type collision condition is: a fourth SRS resource indicated by spatial relation information in the first SRS configuration information is different from a fifth SRS resource indicated by spatial relation information in the second SRS configuration information, the fourth SRS resource and the fifth SRS resource belong to a same SRS resource set, and the same SRS resource set is an SRS resource set used for beam management.

For example, the first SRS resource set is a CB based SRS resource set, and the second SRS resource set is an SRS resource set used for AS. If the fourth SRS resource indicated by the spatial relation information in the first SRS configuration information is different from the fifth SRS resource indicated by the spatial relation information in the second SRS configuration information, and both the fourth SRS resource and the fifth SRS resource belong to the same SRS resource set used for BM, it is considered that the first SRS resource and the second SRS resource satisfy the fourth type collision condition.

It should be noted that whether the first SRS resource set and the second SRS resource set are of a same type does not need to be limited in this application, that is, a type of the first SRS resource set may be the same as or different from that of the second SRS resource set. A cause is: Both the fourth SRS resource indicated by the spatial relation information in the first SRS resource and the fifth SRS resource indicated by the spatial relation information in the second SRS resource belong to the same SRS resource set used for BM, and the fourth SRS resource is different from the fifth SRS resource. In other words, for the first SRS resource and the second SRS resource, the SRSs needs to be sent on different antenna panels. However, for the SRS resource set used for BM, different SRSs cannot be simultaneously sent on a same antenna panel.

Optionally, that the first SRS resource collides with the second SRS resource in a time unit may include: the first SRS resource and the second SRS resource satisfy all of a second time-domain collision condition, a frequency-domain collision condition, and a code-domain collision condition. The second time-domain collision condition is: at least one symbol included in the first SRS resource is the same as at least one symbol included in the second SRS resource, and the time unit is the symbol. The frequency-domain collision condition is: the first SRS resource and the second SRS resource include at least one same subcarrier. The code-domain collision condition is: the first SRS resource and the second SRS resource include at least one SRS sequence that has a same cyclic shift.

When S202 is not included, the network device needs to receive and parse the SRS on a union set of the first SRS resource and the second SRS resource. In other words, this embodiment of this application may not include S202, that is, S202 is an optional step.

S203: The terminal receives the first sounding reference signal SRS configuration information and the second SRS configuration information.

For example, the terminal may receive the two pieces of SRS configuration information through an air interface connection.

S204: The terminal determines that the first SRS resource collides with the second SRS resource in the time unit.

For example, the terminal may determine, by using a communication method that is the same as that in S202, that the first SRS resource collides with the second SRS resource in the time unit. Details are not described again in this embodiment of this application.

It may be understood that, to ensure consistency between determining behaviors of the network device and the terminal, the foregoing collision determining condition may be predefined in a protocol and stored in the network device and the terminal, or may be configured by the network device for the terminal. A specific storage manner or a specific configuration manner is not limited herein. For example, the foregoing determining condition may be configured when the network device sends the first SRS configuration information or the second SRS configuration information.

S205: The terminal determines to send the SRS on one of the first SRS resource and the second SRS resource in the time unit.

Optionally, that the terminal determines to send the SRS on one of the first SRS resource and the second SRS resource in the time unit in S205 may include: If the terminal determines that a priority of the first SRS resource is higher than a priority of the second SRS resource, the terminal determines to send the SRS on the first SRS resource in the time unit. In this way, it can be ensured that a high-priority SRS resource is preferentially used to transmit the SRS. The high-priority SRS resource may be an SRS resource that has greater impact on uplink channel measurement and uplink resource scheduling. For example, the high-priority SRS resource may be the SRS resource used for BM, or an SRS resource that occupies a relatively large quantity of symbols in a same slot. Alternatively, the high-priority SRS resource may be an SRS resource that has a higher requirement for timeliness of uplink channel measurement and uplink resource scheduling. For example, a priority of an aperiodic (aperiodic, AP) SRS resource is higher than a priority of a semi-persistent (semi-persistent, SP) SRS resource, and the priority of the semi-persistent SRS resource is higher than a priority of a periodic (periodic, P) SRS resource. In addition, the high-priority SRS resource may alternatively be an SRS resource having a shorter scheduling time or activation time in the two SRS resources.

Optionally, the communication method may further include: The terminal receives third SRS configuration information, where the third SRS configuration information is used to indicate the terminal to send an SRS on a sixth SRS resource. Then, the terminal determines that the sixth SRS resource collides with the second SRS resource but does not collide with the first SRS resource in the time unit and that a priority of the second SRS resource is higher than a priority of the sixth SRS resource. Correspondingly, that the terminal determines to send the SRS on the first SRS resource in the time unit may include: The terminal sends the SRSs on the first SRS resource and the sixth SRS resource in the time unit.

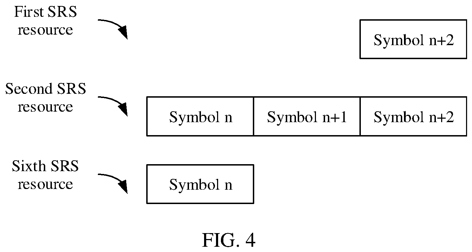

For example, as shown in FIG. 4, in a specified time period, for example, in a slot (slot), the first SRS resource includes a symbol n, a symbol n+1, and a symbol n+2, the second SRS resource includes the symbol n, and the sixth SRS resource includes the symbol n+2. In other words, both the first SRS resource and the sixth SRS resource collide with the second SRS resource, but the first SRS resource does not collide with the sixth SRS resource. Assuming that the priority of the first SRS resource is higher than the priority of the second SRS resource, and the priority of the second SRS resource is higher than a priority of the sixth SRS resource, the terminal may determine an SRS sending manner in one of the following two manners.

Manner 1: The terminal determines the priorities in a sending time sequence, and sends the SRS on an SRS resource with a highest priority.

Step 1: The terminal determines, on the symbol n, that the priority of the second SRS resource is higher than the priority of the sixth SRS resource and that the second SRS resource collides with the sixth SRS resource, so that the terminal determines not to send the SRS on the sixth SRS resource.

Step 2: The terminal determines, on the symbol n+2, that the priority of the first SRS resource is higher than the priority of the second SRS resource and that the first SRS resource collides with the second SRS resource, so that the terminal determines not to send the SRS on the second SRS resource, in other words, the terminal sends the SRS only on the first SRS resource.

Manner 2: The terminal sends the SRSs on an SRS resource with a highest priority and an SRS resource that does not collide with the SRS resource with the highest priority.

Step 1: The terminal determines that both the first SRS resource and the sixth SRS resource collide with the second SRS resource, but the first SRS resource does not collide with the sixth SRS resource.

Step 2: The terminal determines that the priority of the first SRS resource is higher than the priority of the second SRS resource or that the priority of the sixth SRS resource is higher than the priority of the second SRS resource.

Step 3: The terminal determines, based on determining results in Step 1 and Step 2, to send the SRSs on the first SRS resource and the sixth SRS resource and not to send the SRS on the second SRS resource.

Compared with Manner 1 in which the SRS is sent on the first SRS resource, in Manner 2, the SRSs can be sent on the first SRS resource and the sixth SRS resource. In other words, when it is ensured that the first SRS resource with the highest priority is preferentially used to send the SRS, in Manner 2, the SRS can further be sent on the sixth SRS resource, thereby further improving SRS resource utilization efficiency and SRS transmission efficiency.

Optionally, the communication method may further include: The terminal reports a quantity of resources or ports that can be used to send SRSs in a same symbol. In this way, the network device determines SRS configuration information for the terminal based on the quantity of resources or ports, so that it can be ensured that the configured quantity of resources or ports does not exceed a maximum quantity that is of resources or ports and that can be supported by the terminal, thereby reducing a probability of a collision between SRS resources indicated by different SRS configuration information, and further improving SRS resource utilization efficiency and SRS transmission efficiency.

S206: The network device determines to receive the SRS on one of the first SRS resource and the second SRS resource in the time unit.

It may be understood that, when determining that the first SRS resource collides with the second SRS resource in the time unit, the network device may also determine priorities of the first SRS resource and the second SRS resource by using a same communication method on a terminal side, and determine, based on the determined priorities, a quantity of SRSs that need to be received and parsed, so that the SRS can be prevented from being received and parsed on the union set of the first SRS resource and the second SRS resource, thereby reducing an amount of calculation of the network device, and further improving SRS transmission efficiency. Based on this, correspondingly, that the network device determines to receive the SRS on one of the first SRS resource and the second SRS resource in the time unit may include: The network device determines that the priority of the first SRS resource is higher than the priority of the second SRS resource, and determines to receive the SRS on the first SRS resource in the time unit.

Optionally, the communication method further includes: The network device sends the third SRS configuration information, where the third SRS configuration information is used to indicate the terminal to send the SRS on the sixth SRS resource. Then, the network device determines that the sixth SRS resource collides with the second SRS resource but does not collide with the first SRS resource in the time unit and that the priority of the second SRS resource is higher than a priority of the sixth SRS resource. Correspondingly, that the network device determines to receive the SRS on the first SRS resource in the time unit may include: The network device receives the SRSs on the first SRS resource and the sixth SRS resource in the time unit. In other words, when it is ensured that the first SRS resource with the highest priority is preferentially used to receive the SRS, the network device can further receive the SRS on the sixth SRS resource, thereby further improving SRS resource utilization efficiency and SRS transmission efficiency.

Optionally, corresponding to the step in which the terminal reports the quantity of resources or ports that can be used to send the SRSs in the same symbol in the first aspect, the communication method further includes: The network device receives the quantity of resources or ports that can be used by the terminal to send the SRSs in the same symbol, and determines the SRS configuration information for the terminal based on the quantity of resources or ports. In this way, a probability of a collision between SRS resources indicated by different SRS configuration information is reduced, thereby further improving SRS resource utilization efficiency and SRS transmission efficiency.

It should be noted that a specific execution sequence of S201 to S206 may be different from a description sequence of S201 to S206. For example, S202 may be performed after S201, or may be performed before S201, that is, the SRS configuration information is delivered after a collision is determined. For another example, S202 may be performed before S204, or may be performed after S204, provided that S202 is performed before S206.

According to the communication method provided in this embodiment of this application, even if the first SRS resource configured by using the first configuration information collides with the second SRS resource configured by using the second configuration information in the time unit, the SRS can be sent and received on one of the first SRS resource and the second SRS resource in the time unit, so that it is avoided that both the first SRS resource and the second SRS resource are idle in the time unit, thereby improving SRS resource utilization efficiency and SRS transmission efficiency. Therefore, uplink channel measurement efficiency and uplink resource scheduling efficiency are improved.

As shown in FIG. 5, an embodiment of this application provides a communication method, to be applicable to SRS transmission in an NR system. This embodiment of this application may be applied to communication between network devices (for example, a macro base station and a micro base station), and communication between a network device and a terminal. Herein, communication between the network device and the terminal is used as an example for description, but this application is not limited thereto. For example, communication between the network device and the terminal may be collectively referred to as communication between a transmit end and a receive end. In this application, "uplink" may indicate that the terminal is a transmit end, and the network device is a receive end, and "downlink" may indicate that the network device is a transmit end, and the terminal is a receive end. When this application is applied to communication between the transmit end and the receive end, "uplink" may indicate a transmission direction, and "downlink" may indicate another transmission direction opposite to the uplink direction.

As shown in FIG. 5, the communication method 500 may include S501 to S506.

S501: The network device sends first configuration information and second configuration information.

The first configuration information is used to indicate the terminal to send a sounding reference signal SRS on at least one first resource included in a first resource set, the first resource set is an SRS resource set used for antenna switching AS, and the second configuration information is used to indicate the terminal to send an SRS or an uplink control channel PUCCH on a second resource.

For example, the network device may respectively add the first configuration information and the second configuration information to different RRC signaling for sending, or may respectively add the first configuration information and the second configuration information to another piece of downlink control signaling for sending. This is not limited in this embodiment of this application. For the RRC signaling, refer to the foregoing embodiment. Details are not described herein again.

For example, the PUCCH may be a physical uplink control channel (physical uplink control channel, PUCCH), and is mainly used to carry uplink control information. The uplink control information may include at least one of an acknowledgment (acknowledgement, ACK)/a non-acknowledgement (non-acknowledgement, NACK) of a hybrid automatic repeat request (hybrid automatic repeat request, HARQ), a channel quality indicator (channel quality indicator, CQI), a precoding matrix indicator (precoding matrix indicator, PMI), or a rank indicator (rank indicator, RI). Because the HARQ, the CQI, the PMI, and the RI all belong to the prior art, details are not described in this embodiment of this application.

S502: The network device determines that at least one guard interval GP symbol between the first resources included in the first resource set is the same as a symbol included in the second resource.

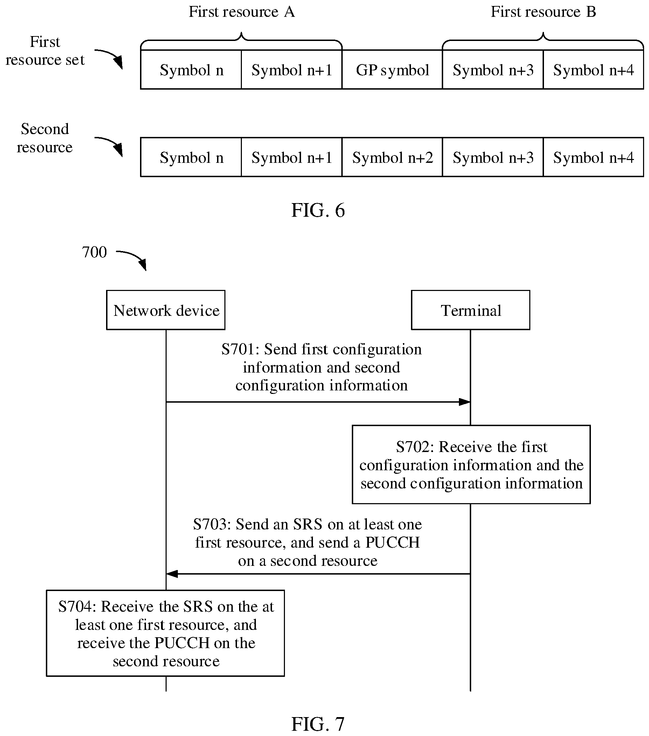

For example, as shown in FIG. 6, a first SRS resource set includes a symbol n, a symbol n+1, a symbol n+3, and a symbol n+4, and a symbol n+2 is the GP symbol. A second SRS resource includes the symbol n to the symbol n+4. In other words, the GP symbol between the symbol n+1 and the symbol n+3 included in the first SRS resource set is the same as the symbol n+2 in the second SRS resource, so that it is considered that the first SRS resource set collides with the second SRS resource.

It should be noted that the first SRS resource set may alternatively not include a symbol adjacent to the GP symbol. For example, the first SRS resource set may not include at least one of the symbol n+1 and the symbol n+3. It may be understood that the symbols in the second resource may alternatively be inconsecutive. For example, the second resource may not include at least one of the symbol n, the symbol n+2, and the symbol n+4.

It should be noted that this embodiment of this application may alternatively not include S502, that is, S502 is an optional step. When S502 is not included, the network device needs to receive and parse the SRS or the PUCCH on a union set of the first resource set and the second resource.

It should be noted that whether a resource set to which the second resource belongs is a resource set used for AS does not need to be limited in this embodiment of this application. If the resource set to which the second resource belongs is the resource set used for AS, the second resource is used as the first resource set, all resources included in the first resource set in a slot are used as the second resource, and then the communication method provided in this embodiment of this application is performed again.

S503: The terminal receives the first configuration information and the second configuration information.

S504: The terminal determines that the at least one guard interval GP symbol between the first resources in the first resource set is the same as the symbol in the second resource.

For example, the terminal may determine, by using a communication method that is the same as that in S502, that a GP symbol between first resources in the first SRS resource set is the same as a symbol in the second SRS resource. Details are not described again in this embodiment of this application.

S505: The terminal determines to send the SRS or the uplink control channel PUCCH on the second resource.

It should be noted that the terminal may send the SRSs on a portion of first resources included in the first resource set, to further improve resource utilization and signal transmission efficiency.

Optionally, the terminal may determine to send the SRS on a first resource in the first resource set other than a symbol that satisfies a first condition. For example, the SRSs may be sent on some or all symbols that do not satisfy the first condition.

The first condition may be one of the following conditions:
Condition 1: The symbol includes a specified quantity of symbols that are in the first resource set and that are located before the GP symbol and closest to the GP symbol. The specified quantity may be set. For example, the specified quantity may be 1 or 2.
   For example, as shown in FIG. 6, if the specified quantity is 1, the symbol that satisfies Condition 1 is the symbol n+1. Correspondingly, the terminal does not send the SRS on the symbol n+1, but may send the SRSs on some or all of the symbol n and the symbol n+2 to the symbol n+4.
   It should be noted that the symbol that satisfies Condition 1 may be a symbol that is located before the GP symbol and adjacent to the GP symbol, for example, the symbol n+1. Alternatively, the symbol that satisfies Condition 1 may be a symbol that is located before the GP symbol and that is not adjacent to the GP symbol. For example, if the first resource set does not include the symbol n+1, the symbol that satisfies Condition 1 is the symbol n.
Condition 2: The symbol includes all symbols in a first resource that is in the first resource set and that is located before the GP symbol and closest to the GP symbol.
   For example, as shown in FIG. 6, it is assumed that the first resource set includes two first resources: a first resource A and a first resource B. The first resource A includes a symbol n and a symbol n+1. The first resource B includes a symbol n+3 and a symbol n+4. The first resource that is in the first resource set and that is located before the GP symbol and closest to the GP symbol is the first resource A. All the symbols in the first resource that is in the first resource set and that is located before the GP symbol and closest to the GP symbol are the symbol n and the symbol n+1 in the first resource A. Correspondingly, the terminal does not send the SRSs on the symbol n and the symbol n+1 in the first resource A, but may send the SRSs/SRS on the symbol n+3 and/or the symbol n+4 in the first resource B.
   It should be noted that the first resource that satisfies Condition 2 may be a first resource that is located before the GP symbol and adjacent to the GP symbol, for example, the first resource A. Alternatively, the first resource that satisfies Condition 2 may be a first resource that is located before the GP symbol and that is not adjacent to the GP symbol.
Condition 3: The symbol includes a specified quantity of symbols that are in the first resource set and that are located behind the GP symbol and closest to the GP symbol. The specified quantity may be set. For example, the specified quantity may be 1 or 2.
   For example, as shown in FIG. 6, if the specified quantity is 1, the symbol that satisfies Condition 3 is the symbol n+3. Correspondingly, the terminal does not send the SRS on the symbol n+3, but may send the SRSs on some or all of the symbol n, the symbol n+1, and the symbol n+4.
   It should be noted that the symbol that satisfies Condition 3 may be a symbol that is located behind the GP symbol and adjacent to the GP symbol, for example, the symbol n+3. Alternatively, the symbol that satisfies Condition 3 may be a symbol that is located behind the GP symbol and that is not adjacent to the GP symbol. For example, if the first resource set does not include the symbol n+3, the symbol that satisfies Condition 3 is the symbol n+4.
Condition 4: The symbol includes all symbols in a first resource that is in the first resource set and that is located behind the GP symbol and closest to the GP symbol.
   For example, as shown in FIG. 6, it is assumed that the first resource set includes two first resources: a first resource A and a first resource B. The first resource A includes a symbol n and a symbol n+1. The first resource B includes a symbol n+3 and a symbol n+4. The first resource that is in the first resource set and that is located behind the GP symbol and closest to the GP symbol is the first resource B. All the symbols in the first resource that is in the first resource set and that is located behind the GP symbol and closest to the GP symbol are the symbol n+3 and the symbol n+4 in the first resource B. Correspondingly, the terminal does not send the SRSs on the symbol n+3 and the symbol n+4 in the first resource B, but may send the SRSs/SRS on the symbol n and/or the symbol n+1 in the first resource A.
   It should be noted that the first resource that satisfies Condition 4 may be a first resource that is located behind the GP symbol and adjacent to the GP symbol, for example, the first resource B. Alternatively, the first resource that satisfies Condition 4 may be a first resource that is located behind the GP symbol and that is not adjacent to the GP symbol.
Condition 5: The symbol includes a symbol that is in the first resource set and that is located before the GP symbol and closest to the GP symbol and a symbol that is in the first resource set and that is located behind the GP symbol and closest to the GP symbol. That is, Condition 5 is a union set of Condition 1 and Condition 3.
Condition 6: The symbol includes all symbols in a first resource that is in the first resource set and that is located before the GP symbol and closest to the GP symbol and all symbols in a first resource that is in the first resource set and that is located behind the GP symbol and closest to the GP symbol. That is, Condition 6 is a union set of Condition 2 and Condition 4.
Condition 7: The symbol includes a specified quantity of symbols that are in the first resource set and that use different transmit antennas from the second resource. The specified quantity may be set. For example, the specified quantity may be 1 or 2.

The transmit antenna is a physical antenna. For example, as shown in FIG. 6, if the specified quantity is 1, a symbol n and a symbol n+1 included in the first resource set use a transmit antenna 0 and a transmit antenna 1, a symbol n+3 and a symbol n+4 included in the first resource set use a transmit antenna 2 and a transmit antenna 3, and all symbols in the second resource use the transmit antenna 0 and the transmit antenna 1, the symbol n+3 and the symbol n+4 included in the first resource set satisfy Condition 7. Correspondingly, the terminal does not send the SRSs on the symbol n+3 and the symbol n+4 included in the first resource set, but may send the SRSs/SRS on the symbol n and/or the symbol n+1 included in the first resource set.

Optionally, to simplify a determining process and reduce a workload of the terminal, the terminal may alternatively not determine the first condition, but directly determine not to send the SRS on the first resource set in a slot in which the second resource is located. The communication method may further include: The terminal determines not to send the SRS on the first resource set in the slot in which the second resource is located.

S506: The network device determines to receive the SRS or the PUCCH on the second resource.

The network device may determine, based on a determining result in S502, that the terminal sends the SRS or the PUCCH on the second resource. Therefore, the network device may also receive and parse the received SRS or the received PUCCH on the second resource in a more targeted manner, so that a workload of receiving and parsing the SRS or the PUCCH by the network device can be reduced, thereby improving signal transmission efficiency.

Optionally, the network device may alternatively perform the determining procedure of Condition 1 to Condition 7 in the first condition (it may be understood that the network device and the terminal need to comply with a same condition), and determine, based on a determining result, to receive the SRS on a first resource that is the same as the first resource on which the terminal sends the SRS, so that the network device receives and parses the SRS in a more targeted manner, and workload is reduced, thereby improving SRS transmission efficiency and uplink resource scheduling efficiency.

Optionally, corresponding to the step in which the terminal determines not to send the SRS on the first resource set, to reduce workload of the network device, the communication method may further include: The network device determines not to receive the SRS on the first resource set in the slot in which the second resource is located.

It should be noted that, to ensure consistency between determining behaviors of the network device and the terminal, the network device may specify, in downlink signaling in which the network device delivers the first configuration information and the second configuration information, a to-be-determined condition in the first condition.

It should be noted that a specific execution sequence of S501 to S506 may be different from a description sequence of S501 to S506. For example, S502 may be performed after S501, or may be performed before S501, that is, the configuration information is delivered after a collision is determined. For another example, S502 may be performed before S504, or may be performed after S504, provided that S502 is performed before S506.

According to the communication method provided in this embodiment of this application, even if the at least one guard interval GP symbol between the first resources in the first resource set is the same as the symbol in the second resource, it may be determined that the SRS or the PUCCH is sent and received on the second resource, so that it is avoided that all the first resources included in the first resource set and the second resource are idle, thereby improving resource utilization efficiency and signal transmission efficiency.

As shown in FIG. 7, an embodiment of this application further provides another communication method.

S701: A network device sends first configuration information and second configuration information.

The first configuration information is used to indicate a terminal to send a sounding reference signal SRS on at least one first resource included in a first resource set, the first resource set is an SRS resource set used for antenna switching AS, and the second configuration information is used to indicate the terminal to send an uplink control channel PUCCH on a second resource.

For details, refer to S501 in the foregoing embodiment. Details are not described herein again.

S702: The terminal receives the first configuration information and the second configuration information.

For details, refer to S503 in the foregoing embodiment. Details are not described herein again.

S703: The terminal sends the SRS on the at least one first resource, and sends the PUCCH on the second resource. There is at least one guard interval GP symbol between a first symbol of a first first resource or a last symbol of a last first resource in the first resource set and the second resource in a same slot.

Specifically, if a symbol of the second resource is located before all SRS resources in the first resource set in a slot, the terminal determines that there are Y GP symbols between the second resource and a first SRS resource in the first resource set in the slot; or if a symbol of the second resource is located behind all SRS resources in the first resource set in a slot, the terminal determines that there are Y GP symbols between the second resource and a last SRS resource in the first resource set in the slot. Y is a positive integer greater than or equal to 1, and may be configured by a base station or predefined. For example, for a subcarrier spacing of 15 kHz to 60 kHz, Y=1; for a subcarrier spacing of 120 kHz, Y=2; and for a subcarrier spacing of 240 kHz, Y=4. The terminal performs no transmission or no uplink transmission in the GP. In this way, a sufficient switching time can be ensured during antenna switching between the SRS and the PUCCH, so that transmission performance of the SRS and the PUCCH is not affected.

S704: The network device receives the SRS on the at least one first resource, and receives the PUCCH on the second resource. There is at least one guard interval GP symbol between the first symbol of the first first resource or the last symbol of the last first resource in the first resource set and the second resource in the same slot.

S704 is a receiving step corresponding to S703. For details, refer to S703. Details are not described herein again.

According to the communication method provided in this embodiment of this application, in the slot in which there is at least one GP symbol between the first symbol or the last symbol of all first resources included in the first resource set and the second resource, the SRS can be sent and received on the at least one first resource before the GP symbol and the PUCCH can be sent and received on the second resource after the GP symbol, or the SRS can be sent and received on the at least one first resource after the GP symbol and the PUCCH can be sent and received on the second resource before the GP symbol, so that a sufficient time is reserve for antenna switching, thereby avoiding adverse impact on SRS transmission and PUCCH transmission, and ensuring uplink channel quality evaluated based on an SRS measurement result and a PUCCH measurement result and accuracy of uplink resource scheduling.

It may be understood that the communication method described in the foregoing embodiments may be separately implemented, or may be used in combination. This is not limited herein.

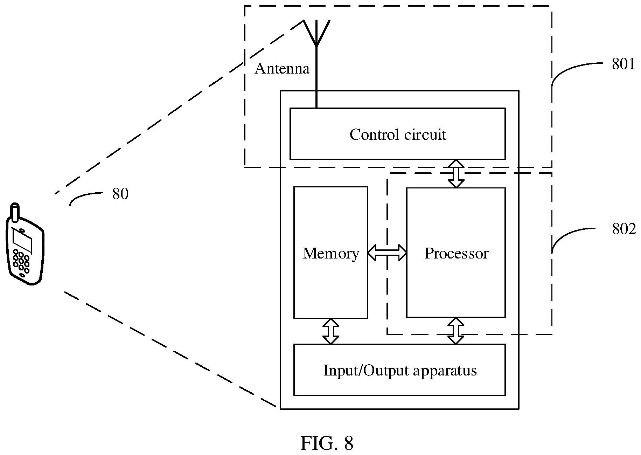

The communication method provided in the embodiments of this application is described above in detail with reference to FIG. 2 to FIG. 7. The following describes in detail communications apparatuses provided in the embodiments of this application with reference to FIG. 8 to FIG. 10.

FIG. 8 is a schematic structural diagram of a terminal according to an embodiment of this application. The terminal is applicable to the system shown in FIG. 1, and perform functions of the terminal in the foregoing communication method embodiments. For ease of description, FIG. 8 shows merely main components of the terminal. As shown in FIG. 8, a terminal 80 includes a processor, a memory, a control circuit, an antenna, and an input/output apparatus. The processor is mainly configured to: process a communications protocol and communications data, control the entire terminal, execute a software program, and process data of the software program, for example, is configured to support the terminal in performing the action described in the foregoing communication method embodiments. For example, the processor is configured to: determine whether a first SRS resource collides with a second SRS resource, or determine whether a GP symbol between resources included in a first resource set is the same as a symbol in a second resource. The memory is mainly configured to store the software program and the data, for example, store the first SRS configuration information, the second SRS configuration information, the first configuration information, and the second configuration information that are described in the foregoing embodiments. The control circuit is mainly configured to: perform conversion between a baseband signal and a radio frequency signal, and process the radio frequency signal. A combination of the control circuit and the antenna may be referred to as a transceiver, mainly configured to send and receive a radio frequency signal in an electromagnetic wave form. The input/output apparatus, such as a touchscreen, a display, or a keyboard, is mainly configured to receive data input by a user and data output to the user.

After the terminal is powered on, the processor can read a software program in a storage unit, interpret and execute an instruction of the software program, and process data of the software program. When data needs to be sent in a wireless manner, the processor performs baseband processing on to-be-sent data, and then outputs a baseband signal to a radio frequency circuit. After performing radio frequency processing on the baseband signal, the radio frequency circuit sends a radio frequency signal to the outside by using the antenna in an electromagnetic wave form. When data is sent to the terminal, the radio frequency circuit receives a radio frequency signal by using the antenna, converts the radio frequency signal into a baseband signal, and outputs the baseband signal to the processor. The processor converts the baseband signal into data, and processes the data.

A person skilled in the art may understand that for ease of description, FIG. 8 shows only one memory and one processor. In an actual terminal, there may be a plurality of processors and a plurality of memories. The memory may also be referred to as a storage medium, a storage device, or the like. This is not limited in this embodiment of this application.

In an optional implementation, the processor may include a baseband processor and a central processing unit. The baseband processor is mainly configured to process a communications protocol and communications data. The central processing unit is mainly configured to: control the entire terminal, execute a software program, and process data of the software program. Functions of the baseband processor and the central processing unit may be integrated into the processor in FIG. 8. A person skilled in the art may understand that the baseband processor and the central processing unit each may be an independent processor, and are interconnected by using a technology such as a bus. A person skilled in the art may understand that the terminal may include a plurality of baseband processors to adapt to different network standards, and the terminal may include a plurality of central processing units to enhance a processing capability of the terminal. All components of the terminal may be connected by using various buses. The baseband processor may also be expressed as a baseband processing circuit or a baseband processing chip. The central processing unit may also be expressed as a central processing circuit or a central processing chip. A function of processing the communications protocol and the communications data may be embedded into the processor, or may be stored in a storage unit in a software program form. The processor executes the software program to implement a baseband processing function.

In this embodiment of this application, the antenna that has a transceiver function and the control circuit may be considered as a transceiver unit 801 of the terminal 80. For example, the transceiver unit 801 is configured to support the terminal in performing the receiving function and the sending function described in at least one of FIG. 2, FIG. 5, and FIG. 7. The processor that has a processing function is considered as a processing unit 802 of the terminal 80. As shown in FIG. 8, the terminal 80 includes the transceiver unit 801 and the processing unit 802. The transceiver unit may also be referred to as a transceiver, a transceiver machine, a transceiver apparatus, or the like. Optionally, a device configured to implement a receiving function in the transceiver unit 801 may be considered as a receiving unit. A device configured to implement a sending function in the transceiver unit 801 may be considered as a sending unit. In other words, the transceiver unit 801 includes the receiving unit and the sending unit. The receiving unit may also be referred to as a receiver, an input port, a receiving circuit, or the like. The sending unit may be referred to as a transmitter machine, a transmitter, a transmitting circuit, or the like.

The processor 802 may be configured to execute an instruction stored in the memory, to control the transceiver unit 801 to send and/or receive a signal, thereby completing the functions of the terminal in the foregoing communication method embodiments. In an implementation, a function of the transceiver unit 801 may be implemented by using a transceiver circuit or a transceiver-dedicated chip.

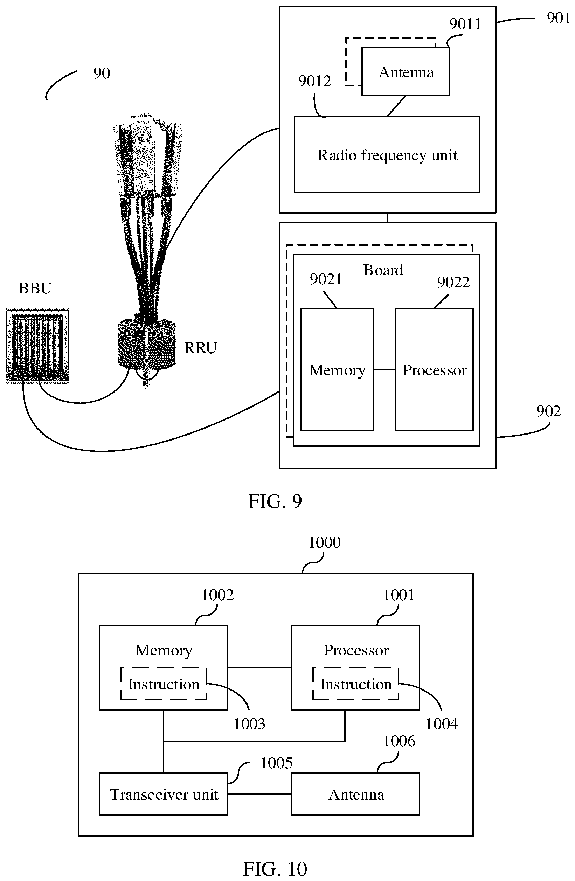

FIG. 9 is a schematic structural diagram of a network device according to an embodiment of this application, for example, may be a schematic structural diagram of a base station. As shown in FIG. 9, the base station is applicable to the system shown in FIG. 1, to perform functions of the network device in the foregoing communication method embodiments. A base station 90 may include one or more radio frequency units, for example, a remote radio unit (remote radio unit, RRU) 901 and one or more baseband units (baseband unit, BBU) 902. The RRU 901 may be referred to as a transceiver unit, a transceiver machine, a transceiver circuit, a transceiver, or the like, and may include at least one antenna 9011 and a radio frequency unit 9012. The RRU 901 part is mainly configured to send and receive a radio frequency signal and perform conversion between a radio frequency signal and a baseband signal, for example, configured to send the signaling message in the foregoing embodiments to a terminal. The BBU 902 part is mainly configured to: perform baseband processing, control the base station, and the like. The RRU 901 and the BBU 902 may be physically disposed together, or may be physically separated, that is, in a distributed base station.

The BBU 902 is a control center of the base station, may also be referred to as a processing unit, and is mainly configured to complete a baseband processing function such as channel coding, multiplexing, modulation, or spreading. For example, the BBU (processing unit) 902 may be configured to control the base station to perform an operation procedure related to the network device in the foregoing communication method embodiments.

In an example, the BBU 902 may include one or more boards, and a plurality of boards may jointly support a radio access network (such as an LTE network) of a single access standard, or may separately support radio access networks (such as an LTE network, a 5G network, and another network) of different access standards. The BBU 902 further includes a memory 9021 and a processor 9022. The memory 9021 is configured to store a necessary instruction and necessary data. For example, the memory 8021 stores at least one of the first SRS configuration information, the second SRS configuration information, the first configuration information, and the second configuration information in the foregoing embodiments. The processor 9022 is configured to control the base station to perform a necessary action, for example, is configured to control the base station to perform an operation procedure related to the network device in the foregoing communication method embodiments. The memory 9021 and the processor 9022 may serve one or more boards. In other words, a memory and a processor may be separately disposed on each board. Alternatively, a plurality of boards may share a same memory and a same processor. In addition, a necessary circuit may further be disposed on each board.

FIG. 10 is a schematic structural diagram of a communications apparatus 1000. The apparatus 1000 may be configured to implement the communication methods described in the foregoing communication method embodiments. For details, refer to the descriptions in the foregoing communication method embodiments. The communications apparatus 1000 may be a chip, a network device (for example, a base station), a terminal, another network device, or the like.

The communications apparatus 1000 includes one or more processors 1001. The processor 1001 may be a general-purpose processor, a dedicated processor, or the like, for example, may be a baseband processor or a central processing unit. The baseband processor may be configured to process a communications protocol and communications data. The central processing unit may be configured to: control the communications apparatus (for example, a base station, a terminal, or a chip), execute a software program, and process data of the software program. The communications apparatus may include a transceiver unit, configured to input (receive) and output (send) a signal. For example, the communications apparatus may be a chip, and the transceiver unit may be an input and/or output circuit or a communications interface of the chip. The chip may be used for a terminal, a base station, or another network device. For another example, the communications apparatus may be a terminal, a base station, or another network device, and the transceiver unit may be a transceiver, a radio frequency chip, or the like.

The communications apparatus 1000 includes the one or more processors 1001, and the one or more processors 1001 may implement the communication method performed by the network device or the terminal in the embodiment shown in at least one of FIG. 2, FIG. 5, and FIG. 7.

In a possible design, the communications apparatus 1000 includes means (means) configured to perform processing functions performed by the network device in the foregoing communication method embodiments. For example, one or more processors may be configured to perform the foregoing functions, and the transceiver, an input/output circuit, or an interface of the chip may be configured to: send first SRS configuration information and second SRS configuration information, send first configuration information and second configuration information, and receive an SRS. For the configuration information and the SRS, refer to the related descriptions in the foregoing communication method embodiments.

In a possible design, the communications apparatus 1000 includes means (means) configured to perform processing functions performed by the terminal in the foregoing communication method embodiments. For example, one or more processors may be configured to perform the foregoing functions, and the transceiver, an input/output circuit, or an interface of the chip may be configured to: receive first SRS configuration information and second SRS configuration information, receive first configuration information and second configuration information, and send an SRS. For the configuration information and the SRS, refer to the related descriptions in the foregoing communication method embodiments.

Optionally, the processor 1001 may further implement another function in addition to the communication method in the embodiment shown in FIG. 2, FIG. 5, or FIG. 7.

Optionally, in a design, the processor 1001 may alternatively include an instruction 1003. The instruction may be run on the processor, so that the communications apparatus 1000 performs the communication method described in the foregoing communication method embodiments.

In another possible design, the communications apparatus 1000 may alternatively include a circuit. The circuit may implement functions of the network device or the terminal in the foregoing communication method embodiments.

In another possible design, the communications apparatus 1000 may include one or more memories 1002 that store an instruction 1004. The instruction may be run on the processor, so that the communications apparatus 1000 performs the communication method described in the foregoing communication method embodiments. Optionally, the memory may further store data. Optionally, the processor may also store an instruction and/or data. For example, the one or more memories 1002 may store the configuration information described in the foregoing embodiments. The processor and the memory may be disposed separately, or may be integrated together.

In another possible design, the communications apparatus 1000 may further include a transceiver unit 1005 and an antenna 1006. The processor 1001 may be referred to as a processing unit, and controls the communications apparatus (the terminal or the base station). The transceiver unit 1005 may be referred to as a transceiver machine, a transceiver circuit, a transceiver, or the like, and is configured to implement a transceiver function of the communications apparatus by using the antenna 1006.

This application further provides a communications system, including the foregoing one or more network devices and one or more terminals.

It should be understood that, the processor in the embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA), or another programmable logical device, discrete gate or transistor logical device, discrete hardware component, or the like. The general-purpose processor may be a microprocessor, or the processor may be any conventional processor or the like.

It may be further understood that the memory in the embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When the software is used to implement the embodiments, all or some of the foregoing embodiments may be implemented in a form of a computer program product. The computer program product includes one or more computer instructions or computer programs. When the computer instructions or the computer programs are loaded and executed on a computer, the procedures or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a network cable, an optical fiber, or a cable) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship for describing associated objects and represents that three relationships may exist. For example, A and/or B may represent three cases: Only A exists, both A and B exist, and only B exists. A and B may be singular or plural. In addition, the character "/" in this specification usually represents an "or" relationship between the associated objects, or may represent an "and/or" relationship. For details, refer to foregoing and following descriptions for understanding.

In this application, "at least one" means one or more, and "a plurality of" means two or more. "At least one item (piece) of the following" or a similar expression thereof means any combination of these items, including any combination of singular item (piece) or plural items (pieces). For example, at least one (one piece) of a, b, or c may indicate: a, b, c, a-b, a-c, b-c, or a-b-c, where a, b, and c may be singular or plural.

It should be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different communication methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing communication method embodiments. Details are not described herein again.

In the several embodiments provided in this application, it should be understood that the disclosed system, apparatus, and communication method may be implemented in other manners. For example, the described apparatus embodiments are merely examples. For example, division into the units is merely logical function division. There may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate. Components displayed as units may or may not be physical units, to be specific, may be located at one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the prior art, or a portion of the technical solutions may be implemented in a form of a software product. The software product is stored in a storage medium, and includes several instructions for instructing a computer device (which may be a personal computer, a server, or a network device) to perform all or some of the steps of the communication methods described in the embodiments of this application. The storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first sounding reference signal SRS configuration information and second SRS configuration information, wherein the first SRS configuration information is used to indicate to send an SRS on a first SRS resource, and the second SRS configuration information is used to indicate to send an SRS on a second SRS resource; and
if the first SRS resource collides with the second SRS resource in a time unit, sending the SRS on one of the first SRS resource and the second SRS resource in the time unit, wherein the time unit comprises a slot or a symbol.

2. A communication method, comprising:
sending first sounding reference signal SRS configuration information and second SRS configuration information, wherein the first SRS configuration information is used to indicate to send an SRS on a first SRS resource, and the second SRS configuration information is used to indicate to send an SRS on a second SRS resource; and
if the first SRS resource collides with the second SRS resource in a time unit, receiving the SRS on one of the first SRS resource and the second SRS resource in the time unit, wherein the time unit comprises a slot or a symbol.

3. The communication method according to claim 1 or 2, wherein the first SRS resource belongs to a first SRS resource set, and the second SRS resource belongs to a second SRS resource set; and
that the first SRS resource collides with the second SRS resource in a time unit comprises:
the first SRS resource and the second SRS resource satisfy a first time-domain collision condition, and at least one of the first SRS resource set and the second SRS resource set is a resource set used for antenna switching AS, wherein the first time-domain collision condition is: at least one slot comprised in the first SRS resource is the same as at least one slot comprised in the second SRS resource, and the time unit is the slot.

4. The communication method according to claim 1 or 2, wherein the first SRS resource belongs to a first SRS resource set, the second SRS resource belongs to a second SRS resource set, and each of the first SRS resource set and the second SRS resource set is one of the following types of SRS resource sets: a codebook CB based SRS resource set, a non-codebook NCB based SRS resource set, an SRS resource set used for beam management BM, and an SRS resource set used for antenna switching AS; and
that the first SRS resource collides with the second SRS resource in a time unit comprises:
the first SRS resource and the second SRS resource satisfy a second time-domain collision condition and a first type collision condition, wherein the second time-domain collision condition is: at least one symbol comprised in the first SRS resource is the same as at least one symbol comprised in the second SRS resource, and the time unit is the symbol; and the first type collision condition is: the first SRS resource set and the second SRS resource set are different types of SRS resource sets.

5. The communication method according to claim 1 or 2, wherein the first SRS resource belongs to a first SRS resource set, and the second SRS resource belongs to a second SRS resource set; and
that the first SRS resource collides with the second SRS resource in a time unit comprises:
the first SRS resource and the second SRS resource satisfy a second time-domain collision condition and a second type collision condition, wherein the second time-domain collision condition is: at least one symbol comprised in the first SRS resource is the same as at least one symbol comprised in the second SRS resource, and the time unit is the symbol; and the second type collision condition is: both the first SRS resource set and the second SRS resource set are SRS resource sets used for antenna switching AS.

6. The communication method according to claim 1 or 2, wherein the first SRS resource belongs to a first SRS resource set, and the second SRS resource belongs to a second SRS resource set; and
that the first SRS resource collides with the second SRS resource in a time unit comprises:
the first SRS resource and the second SRS resource satisfy a second time-domain collision condition and a third type collision condition, wherein the second time-domain collision condition is: at least one symbol comprised in the first SRS resource is the same as at least one symbol comprised in the second SRS resource, and the time unit is the symbol; and the third type collision condition is: the first SRS resource set is an SRS resource set used for beam management BM, a third SRS resource indicated by spatial relation information in the second SRS configuration information belongs to the first SRS resource set, and the third SRS resource is different from the first SRS resource.

7. The communication method according to claim 1 or 2, wherein the first SRS resource belongs to a first SRS resource set, and the second SRS resource belongs to a second SRS resource set; and
that the first SRS resource collides with the second SRS resource in a time unit comprises:
the first SRS resource and the second SRS resource satisfy a second time-domain collision condition and a fourth type collision condition, wherein the second time-domain collision condition is: at least one symbol comprised in the first SRS resource is the same as at least one symbol comprised in the second SRS resource, and the time unit is the symbol; and the fourth type collision condition is: a fourth SRS resource indicated by spatial relation information in the first SRS configuration information is different from a fifth SRS resource indicated by spatial relation information in the second SRS configuration information, the fourth SRS resource and the fifth SRS resource belong to a same SRS resource set, and the same SRS resource set is an SRS resource set used for beam management.

8. The communication method according to claim 1 or 2, wherein that the first SRS resource collides with the second SRS resource in a time unit comprises:
the first SRS resource and the second SRS resource satisfy all of a second time-domain collision condition, a frequency-domain collision condition, and a code-domain collision condition, wherein the second time-domain collision condition is: at least one symbol comprised in the first SRS resource is the same as at least one symbol comprised in the second SRS resource, and the time unit is the symbol; the frequency-domain collision condition is: the first SRS resource and the second SRS resource comprise at least one same subcarrier; and the code-domain collision condition is: the first SRS resource and the second SRS resource comprise at least one SRS sequence that has a same cyclic shift.

9. The communication method according to any one of claim 1 and claims 3 to 8, wherein the sending the SRS on one of the first SRS resource and the second SRS resource in the time unit comprises:
determining that a priority of the first SRS resource is higher than a priority of the second SRS resource; and
determining to send the SRS on the first SRS resource in the time unit.

10. The communication method according to claim 9, further comprising:
receiving third SRS configuration information, wherein the third SRS configuration information is used to indicate to send an SRS on a sixth SRS resource;
determining that the sixth SRS resource collides with the second SRS resource but does not collide with the first SRS resource in the time unit; and
determining to send the SRSs on the first SRS resource and the sixth SRS resource in the time unit.

11. The communication method according to any one of claim 1 and claims 3 to 8, further comprising:
reporting a quantity of resources or ports that can be used to send SRSs in a same symbol.

12. The communication method according to any one of claims 2 to 8, wherein the receiving the SRS on one of the first SRS resource and the second SRS resource in the time unit comprises:
determining that a priority of the first SRS resource is higher than a priority of the second SRS resource; and
determining to receive the SRS on the first SRS resource in the time unit.

13. The communication method according to claim 12, further comprising:
sending third SRS configuration information, wherein the third SRS configuration information is used to indicate to send an SRS on a sixth SRS resource; and
determining that the sixth SRS resource collides with the second SRS resource but does not collide with the first SRS resource in the time unit, wherein
the determining to receive the SRS on the first SRS resource in the time unit comprises:
determining to receive the SRSs on the first SRS resource and the sixth SRS resource in the time unit.

14. The communication method according to any one of claims 2 to 8, further comprising:
receiving a quantity of resources or ports that can be used to send SRSs in a same symbol.

15. A communication method, comprising:
receiving first configuration information and second configuration information, wherein the first configuration information is used to indicate to send a sounding reference signal SRS on at least one first resource comprised in a first resource set, the first resource set is an SRS resource set used for antenna switching AS, and the second configuration information is used to indicate to send an SRS or an uplink control channel PUCCH on a second resource; and
if at least one guard interval GP symbol between the first resources in the first resource set is the same as a symbol comprised in the second resource, determining to send the SRS or the PUCCH on the second resource.

16. The communication method according to claim 15, further comprising:
determining to send the SRS on a first resource in the first resource set other than a symbol that satisfies a first condition, wherein the first condition is one of the following conditions:
the symbol comprises a symbol that is in the first resource set and that is located before the GP symbol and closest to the GP symbol;
the symbol comprises all symbols in a first resource that is in the first resource set and that is located before the GP symbol and closest to the GP symbol;
the symbol comprises a symbol that is in the first resource set and that is located behind the GP symbol and closest to the GP symbol;
the symbol comprises all symbols in a first resource that is in the first resource set and that is located behind the GP symbol and closest to the GP symbol;
the symbol comprises a symbol that is in the first resource set and that is located before the GP symbol and closest to the GP symbol and a symbol that is in the first resource set and that is located behind the GP symbol and closest to the GP symbol;
the symbol comprises all symbols in a first resource that is in the first resource set and that is located before the GP symbol and closest to the GP symbol and all symbols in a first resource that is in the first resource set and that is located behind the GP symbol and closest to the GP symbol; and
the symbol comprises a symbol that is in the first resource set and that uses a different transmit antenna from the second resource.

17. The communication method according to claim 15, further comprising:
determining not to send the SRS on the first resource set in a slot in which the second resource is located.

18. A communication method, comprising:
sending first configuration information and second configuration information, wherein the first configuration information is used to indicate to send a sounding reference signal SRS on at least one first resource comprised in a first resource set, the first resource set is an SRS resource set used for antenna switching AS, and the second configuration information is used to indicate to send an SRS or an uplink control channel PUCCH on a second resource; and
if at least one guard interval GP symbol between the first resources in the first resource set is the same as a symbol in the second resource, determining to receive the SRS or the PUCCH on the second resource.

19. The communication method according to claim 18, further comprising:
determining to receive the SRS on a first resource in the first resource set other than a symbol that satisfies a first condition, wherein the first condition is one of the following conditions:
the symbol comprises a symbol that is in the first resource set and that is located before the GP symbol and closest to the GP symbol;
the symbol comprises all symbols in a first resource that is in the first resource set and that is located before the GP symbol and closest to the GP symbol;
the symbol comprises a symbol that is in the first resource set and that is located behind the GP symbol and closest to the GP symbol;
the symbol comprises all symbols in a first resource that is in the first resource set and that is located behind the GP symbol and closest to the GP symbol;
the symbol comprises a symbol that is in the first resource set and that is located before the GP symbol and closest to the GP symbol and a symbol that is in the first resource set and that is located behind the GP symbol and closest to the GP symbol;
the symbol comprises all symbols in a first resource that is in the first resource set and that is located before the GP symbol and closest to the GP symbol and all symbols in a first resource that is in the first resource set and that is located behind the GP symbol and closest to the GP symbol; and
the symbol comprises a symbol that is in the first resource set and that uses a different transmit antenna from the second resource.

20. The communication method according to claim 18, further comprising:
determining not to receive the SRS on the first resource set in a slot in which the second resource is located.

21. A communication method, comprising:
receiving first configuration information and second configuration information, wherein the first configuration information is used to indicate to send a sounding reference signal SRS on at least one SRS resource comprised in a first resource set, the first resource set is an SRS resource set used for antenna switching AS, and the second configuration information is used to indicate to send an uplink control channel PUCCH on a second resource; and
sending the SRS on a first resource, and sending the PUCCH on the second resource, wherein there is at least one guard interval GP symbol between a first symbol of a first first resource or a last symbol of a last first resource in the first resource set and the second resource in a same slot.

22. The communication method according to claim 21, further comprising:
if a symbol of the second resource is located before all SRS resources in the first resource set in a slot, determining that there are Y GP symbols between the second resource and a first SRS resource in the first resource set in the slot, wherein Y is a positive integer greater than or equal to 1.

23. The communication method according to claim 21, further comprising:
if a symbol of the second resource is located behind all SRS resources in the first resource set in a slot, determining that there are Y GP symbols between the second resource and a last SRS resource in the first resource set in the slot, wherein Y is a positive integer greater than or equal to 1.

24. A communication method, comprising:
sending first configuration information and second configuration information, wherein the first configuration information is used to indicate a terminal to send a sounding reference signal SRS on at least one SRS resource comprised in a first resource set, the first resource set is an SRS resource set used for antenna switching AS, and the second configuration information is used to indicate the terminal to send an uplink control channel PUCCH on a second resource; and
receiving the SRS on a first resource, and receiving the PUCCH on the second resource, wherein there is at least one guard interval GP symbol between a first symbol of a first first resource or a last symbol of a last first resource in the first resource set and the second resource in a same slot.

25. A communications apparatus, configured to perform the communication method according to any one of claims 1 to 24.

26. A communications apparatus, comprising: a processor, wherein the processor is coupled to a memory; and
the memory, configured to store a computer program, wherein
the processor is configured to execute the computer program stored in the memory, so that the apparatus performs the communication method according to any one of claims 1 to 24.

27. A readable storage medium, comprising a program or an instruction, wherein when the program or the instruction is run on a computer, the communication method according to any one of claims 1 to 24 is performed.
